# EUROPÄISCHE PATENTSCHRIFT

(11) **EP 3 659 240 B1**
(45) Veröffentlichungstag und Bekanntmachung des Hinweises auf die Patenterteilung: **17.11.2021**
(21) Anmeldenummer: 18759910.5
(22) Anmeldetag: 20.08.2018
(51) Int. Cl.: H02K 1/27, H02K 1/28

(54) **ROTOR EINER ELEKTRISCHEN MASCHINE**
ROTOR OF AN ELECTRIC MACHINE
ROTOR D'UNE MACHINE ELECTRIQUE

(30) Priorität: 11.10.2017 DE 102017218153
(43) Veröffentlichungstag der Anmeldung: 03.06.2020
(73) Patentinhaber: Baumüller Nürnberg GmbH, 90482 Nürnberg (DE)
(72) Erfinder: GUTJAHR, Frank, 92268 Etzelwang (DE); EISFELD, Paul, 90473 Nürnberg (DE)
(74) Vertreter: FDST Patentanwälte
(86) Internationale Anmeldenummer: PCT/EP2018/072446
(87) Internationale Veröffentlichungsnummer: WO 2019/072447

(56) Entgegenhaltungen:
- WO-A1-2012/086614
- CN-U- 202 231 516
- CN-U- 203 574 463
- GB-A- 2 468 718
- JP-A- 2010 017 032
- US-A1- 2011 074 242

## Beschreibung

Die Erfindung betrifft einen Rotor einer elektrischen Maschine, mit einem eine Welle umfangsseitig umgebenden Rotorkörper, der einen ersten Teilkörper und einen zweiten Teilkörper aufweist, die in axialer Richtung aneinander gefügt sind. Die Erfindung betrifft ferner eine elektrische Maschine. Die elektrische Maschine ist jeweils insbesondere ein Elektromotor.

Industrieanlagen weisen üblicherweise Aktoren auf, die mittels eines Elektromotors angetrieben sind. So werden beispielsweise bei der Kunststoffverarbeitung und der Kunststoffherstellung etwaige Förderschnecken oder Pressstempel üblicherweise mittels eines Elektromotors angetrieben. Somit ist eine Bereitstellung und Verlegung von pneumatischen oder hydraulischen Leitungen nicht erforderlich, was eine Wartung und daher einen Aufwand verringert. Hierbei ist beispielsweise ein Stempel oder eine Schnecke eines Kunststoffspritzgeräts mittels des Elektromotors angetrieben. Eine weitere Verwendung von Elektromotoren findet sich zum Beispiel im maritimen Bereich, wobei der Elektromotor beispielsweise in einer Gondel an einem Rumpf eines Schiffs angebracht ist. Aufgrund der vergleichsweise kompakten Bauweise des Elektromotors ist es möglich, die Gondel bezüglich des Rumpfes zu verschwenken, was eine Manövrierbarkeit des Schiffs erhöht.

Bei den oben genannten Anwendungsfällen für den Elektromotor ist es erforderlich, dass mittels diesem ein vergleichsweise hohes Drehmoment bereitgestellt wird. Aufgrund einer meist beengten Einbaulage ist ein Platz für ein Getriebe nicht gegeben oder zumindest beschränkt. Folglich kann das Drehmoment nicht, oder zumindest nicht vollständig, mittels einer Herabsetzung einer vergleichsweise hohen Drehzahl des Elektromotors bereitgestellt werden. Der Elektromotor ist üblicherweise bürstenlos ausgestaltet, was einen Verschleiß verringert. Die Bestromung des Elektromotors erfolgt üblicherweise mittels eines Umrichters, der insbesondere eine Brückenschaltung, wie eine B6-Schaltung aufweist. Hierbei kann ein Feldstrom in den bürstenlos ausgestalteten Elektromotor eingeprägt werden, was zu einer Ausbildung eines Reluktanzmoments führt.

Damit sich ein Reluktanzdrehmoment ausbildet, ist es erforderlich, dass ein Rotor des Elektromotors in unterschiedliche Richtungen unterschiedliche Drehmomente aufweist. Dies wird mittels Anordnung von Permanentmagneten in Taschen eines Blechpakets des Rotors realisiert. Aufgrund einer derartigen Anordnung ergeben sich jedoch magnetische Kurzschlüsse innerhalb des Blechpakets, was wiederum zu einer Herabsetzung des Drehmoments führt.

Das Blechpaket weist üblicherweise eine Anzahl an in axialer Richtung übereinander gestapelter einzelner Bleche auf, die aneinander befestigt sind. Sofern mittels des Elektromotors ein vergleichsweise großes Drehmoment übertragen werden soll, werden hierfür üblicherweise Gewindestangen herangezogen, die durch das vollständige Blechpaket hindurch reichen, und an denen endseitig jeweils Muttern aufgesetzt sind. Mittels Festziehen der Muttern werden die einzelnen Bleche gegeneinander gepresst. Damit die Gewindestange montiert werden kann, ist es erforderlich, dass die einzelnen Bleche jeweils eine Aussparung aufweist, die miteinander fluchten, wobei der auf diese Weise erstellte Kanal zumindest den Durchmesser der Gewindestange aufweist. Sofern Fertigungstoleranzen vergleichsweise groß gewählt werden, was zu verringerten Herstellungskosten führt, ist es möglich, dass einzelne Bleche von der Gewindestange vergleichsweise weit beabstandet sind. Infolgedessen ist die Position dieser Bleche nicht exakt stabilisiert, was ein Einbringen von Permanentmagneten in die Taschen erschwert. Auch können die Magnete beim Einbringen der Gewindestange zerstört werden. Ferner ist es möglich, dass sich die Bleche in Tangentialrichtung zueinander trotz der Gewindestangen verdrehen, was zu einer ungewollten Geräuschentwicklung oder Unwucht führen kann. Auch ist eine Beschädigung beispielsweise eines der Permanentmagnete möglich.

In WO 2012/086614 A1 ist ein Rotor eines Elektromotors offenbart. Ein Rotorkörper des Rotors ist zwischen zwei Abschlussscheiben gehalten.

Aus JP 2010-017032 A ist ein Elektromotor bekannt. Ein Stator des Elektromotors weist zwei Teilbereiche auf.

CN 202 231 516 U offenbart einen Rotor mit einem Kern aus axial gestapelten Blechpaketmodulen, die mittels einer Stange aneinander befestigt sind. Der Erfindung liegt die Aufgabe zugrunde, einen besonders geeigneten Rotor einer elektrischen Maschine sowie eine besonders geeignete elektrische Maschine anzugeben, wobei vorteilhafterweise eine Montage erleichtert ist.

Hinsichtlich des Rotors wird diese Aufgabe durch die Merkmale des Anspruchs 1 und hinsichtlich der elektrischen Maschine durch die Merkmale des Anspruchs 11 erfindungsgemäß gelöst. Vorteilhafte Weiterbildungen und Ausgestaltungen sind Gegenstand der jeweiligen Unteransprüche.

Der Rotor ist ein Bestandteil einer elektrischen Maschine. Die elektrische Maschine ist beispielsweise bürstenbehaftet. Besonders bevorzugt jedoch ist die elektrische Maschine bürstenlos ausgestaltet. Beispielsweise ist die elektrische Maschine ein Generator. Besonders bevorzugt jedoch ist die elektrische Maschine ein Elektromotor, insbesondere ein bürstenloser Elektromotor. Die elektrische Maschine ist insbesondere eine Synchronmaschine, wie ein Synchronmotor. Vorzugsweise ist bei Betrieb die elektrische Maschine mit einem Umrichter elektrisch verbunden und wird mittels dessen betrieben oder umfasst den Umrichter. Die elektrische Maschine weist beispielsweise eine Leistung zwischen 30 kW und 150 kW, zwischen 40 kW und 140 kW oder zwischen 60 kW und 100 kW und insbesondere gleich 80 kW auf, wobei jeweils zum Beispiel eine Abweichung von 10 kW, 5 kW, 2 kW oder 0 kW vorhanden ist. Geeigneterweise weist die elektrische Maschine eine Drehzahl, beispielsweise eine Nenndrehzahl oder maximale Drehzahl, zwischen 200 1/min. und 8.000 1/min., zwischen 300 1/min. und 6.000 1/min., zwischen 500 1/min. und 5.000 1/min. oder zwischen 1.000 1/min. und 4.000 1/min. auf, wobei insbesondere eine Abweichung von 100 1/min., 50 1/min., 20 1/min. oder 0 1/min. vorhanden ist. Besonders bevorzugt weist die elektrische Maschine ein Drehmoment, beispielsweise ein Maximales- und/oder Nenndrehmoment zwischen 100 Nm und 20.000 Nm, zwischen 165 Nm und 17.500 Nm, zwischen 200 Nm und 15.000 Nm, zwischen 500 Nm und 10.000 Nm oder zwischen 5.000 Nm und 8.000 Nm auf, wobei insbesondere jeweils eine Abweichung von 50 Nm, 20 Nm, 10 Nm oder 0 Nm vorhanden ist. Die elektrische Maschine ist insbesondere ein Innenläufer. Der Elektromotor ist bevorzugt ein Torque-Motor mit einer integrierten Elektronik, und ein Umrichter ist insbesondere aufgesetzt, zweckmäßigerweise auf ein B-seitiges Lagerschild. Unter Torque-Motor wird insbesondere ein hochpoliger, elektrischer Direktantrieb aus der Gruppe der Langsamläufer verstanden. Zweckmäßigerweise weist der Torque-Motor mehr als 20, 40 oder 60 Pole auf.

Die elektrische Maschine ist beispielsweise ein Bestandteil einer Servopresse. Mit anderen Worten wird mittels der elektrischen Maschine insbesondere eine Presse angetrieben. Alternativ hierzu ist die elektrische Maschine ein Bestandteil eines Schiffsantriebs, welcher insbesondere vorgesehen und eingerichtet ist, innerhalb einer Gondel an einem Rumpf eines Schiffs montiert zu werden. Alternativ hierzu wird die elektrische Maschine bevorzugt bei der Kunststoffverarbeitung und/oder der Kunststoffherstellung verwendet. Beispielsweise wird ein Extruder oder ein sonstiger Bestandteil einer Kunststoffspritzgussmaschine, wie ein Stempel mittels der elektrischen Maschine angetrieben.

Der Rotor weist einen Rotorkörper auf, der eine Welle umfangsseitig umgibt. Die Welle erstreckt sich entlang einer Rotationsachse in einer Axialrichtung und ist beispielsweise zylindrisch, insbesondere hohlzylindrisch, ausgestaltet, wobei die jeweilige Zylinderachse parallel zur Axialrichtung ist. Insbesondere ist der Rotor vorgesehen und eingerichtet im Montagezustand drehbar um die Rotationsachse gelagert zu sein. Die Welle ist geeigneterweise aus einem Stahl, wie einem Edelstahl oder einem sonstigen Stahl, erstellt. Geeigneterweise liegt der Rotorkörper umfangsseitig an der Welle an, beispielsweise direkt. Vorzugsweise ist der Rotorkörper an der Welle befestigt und geeigneterweise drehfest daran angebunden. Vorzugsweise steht die Welle in axialer Richtung über den Rotorkörper über.

Der Rotorkörper selbst weist einen ersten Teilkörper und einen zweiten Teilkörper auf, die in axialer Richtung aneinandergefügt sind. Beispielsweise sind der erste Teilkörper und der zweite Teilkörper aneinander befestigt. Hierbei befindet sich der zweite Teilkörper zweckmäßigerweise in Axialrichtung zu dem ersten Teilkörper versetzt, sodass diese in axialer Richtung nicht überlappen. Beispielsweise liegen die beiden Teilkörper jeweils stirnseitig aneinander an, zum Beispiel über ein weiteres Bauteil oder besonders bevorzugt direkt. Das Aneinanderfügen erfolgt mittels einer sich in axialer Richtung erstreckenden Achse, die somit parallel zur Welle verläuft. Die Achse ist insbesondere im Montagezustand fest angeordnet und nicht drehbar. Die Achse ist bezüglich der Welle radial nach außen versetzt und verläuft geeigneterweise innerhalb des Rotorkörpers. Vorzugsweise ist die Achse bezüglich einer radial äußeren Begrenzung des Rotorkörpers radial nach innen versetzt, sodass die Achse durch den Rotorkörper hindurch verläuft.

Der erste Teilkörper weist eine Öse auf, innerhalb derer eine die Achse aufnehmende Buchse angeordnet ist. Die Buchse ist hohlzylindrisch ausgestaltet und umgibt die Achse zumindest abschnittsweise umfangsseitig. Mit anderen Worten wird ein Abschnitt der Achse, insbesondere der Abschnitt der Achse, der durch den ersten Teilkörper verläuft, von der Buchse umfangsseitig umgeben. Mit nochmals anderen Worten ist die Achse innerhalb der Buchse angeordnet. Die Buchse ist vorzugsweise hohlzylindrisch. Geeigneterweise liegt die Buchse umfangsseitig an der Achse an, beispielsweise über ein weiteres Bauteil oder besonders bevorzugt mechanisch direkt. Zweckmäßigerweise ist zwischen der Buchse und der Achse eine Spielpassung erstellt. Alternativ hierzu ist zwischen der Buchse und der Achse eine Presspassung erstellt.

Der zweite Teilkörper weist eine Lasche auf, die die Achse aufnimmt. Hierbei umgibt die Lasche die Achse zumindest abschnittsweise umfangsseitig, insbesondere den Abschnitt der Achse, der innerhalb und/oder durch den zweiten Teilkörper verläuft. Geeigneterweise ist die Achse somit innerhalb der Lasche angeordnet, und die Lasche liegt zweckmäßigerweise umfangsseitig an der Achse an, beispielsweise über ein weiteres Bauteil oder besonders bevorzugt direkt. Zwischen der Achse und der Lasche ist beispielsweise eine Spiel- oder Presspassung erstellt.

Infolgedessen ist es ermöglicht, mittels der Buchse einerseits einen Toleranzausgleich bereitzustellen, wobei eine Krafteinwirkung von der Achse auf den ersten Teilkörper mittels der Buchse und zurück gedämpft ist. Mittels der Lasche hingegen ist eine axiale Bewegung der Buchse im Wesentlichen unterbunden. Hierbei ist es jedoch lediglich erforderlich, dass die Achse vergleichsweise präzise in den zweiten Teilkörper eingeführt wird. Aufgrund der Buchse und dem auf diese Weise bereitgestellten Toleranzausgleich ist ein Einführen erleichtert, sodass die Montage vereinfacht ist.

Besonders bevorzugt ist zwischen der Öse und der Achse und/ oder zwischen der Lasche und der Achse eine Spielpassung erstellt. Beispielsweise fluchten die Innendurchmesser der Buchse und der Lasche miteinander. Die Achse ist insbesondere zylindrisch ausgestaltet. Beispielsweise ist der Rotorkörper mittels einer Passfeder mit der Welle drehfest verbunden. Mit anderen Worten weist beispielsweise die Welle oder der Rotorkörper eine Feder auf, die in eine Nut des Rotorkörpers bzw. der Welle eingreift. Besonders bevorzugt weist sowohl die Welle als auch der Rotorkörper eine in Axialrichtung verlaufende Nut auf, innerhalb derer eine gemeinsame Passfeder zur Übertragung eines Drehmoments zwischen dem Rotorkörper und der Welle angeordnet ist.

Zweckmäßigerweise steht die Achse in axialer Richtung über die beiden Teilkörper, insbesondere über den Rotorkörper, über. An der Achse sind vorzugsweise endseitig weitere Bauteile angebracht, mittels derer eine Kraft in axialer Richtung auf die beiden Teilkörper aufgebracht ist, sodass diese in axialer Richtung aufeinander gepresst sind. Hierbei sind die Bauteile beispielsweise in axialer Richtung zueinander verstellbar, sodass mittels geeigneter Positionierung der Bauteile die Kraft bereitgestellt ist. Geeigneterweise ist die Ausdehnung des ersten Teilkörpers in axialer Richtung gleich der Ausdehnung des zweiten Teilkörpers in axialer Richtung, sodass die beiden aneinander gefügten Teilkörper die doppelte Ausdehnung in axialer Richtung wie der erste Teilkörper bzw. der zweite Teilkörper aufweisen.

Der Rotor weist beispielsweise eine Anzahl an Magneten auf, insbesondere Elektromagneten. Besonders bevorzugt umfasst der Rotor eine Anzahl an Permanentmagneten, die beispielsweise umfangsseitig an dem Rotorkörper befestigt sind. Besonders bevorzugt sind die Magnete jedoch innerhalb von Taschen des Rotorkörpers angeordnet, die sich insbesondere in axialer Richtung erstrecken. Hierbei sind die Taschen zweckmäßigerweise im Wesentlichen radial ausgerichtet, wobei die Permanentmagneten insbesondere ebenfalls radial angeordnet sind. Geeigneterweise ist jeweils einer der Permanentmagnete in einer der Taschen angeordnet. Beispielsweise ist zwischen der jeweiligen Tasche und dem zugeordneten (Permanent-)Magneten zumindest abschnittsweise eine Spielpassung erstellt. Der erste und/oder zweite Teilkörper ist insbesondere aus einem ferromagnetischen Material erstellt. Vorzugsweise sind die Permanentmagnete tangential magnetisiert. Die Magnete sind insbesondere sowohl in dem ersten Teilkörper als auch in dem jeweiligen zweiten Teilkörper angeordnet, zweckmäßigerweise innerhalb von Taschen. Beispielsweise ragt jeder der Magnete des Rotorkörpers durch die beiden Teilkörper hindurch, oder jedem Teilkörper ist ein einzelner Magnetteil zugeordnet, wobei die einzelnen Magnetteile der beiden Teilkörper miteinander fluchten.

Besonders bevorzugt ist die Buchse mit der Öse verpresst. Zweckmäßigerweise ist zwischen der Buchse und der Öse eine Presspassung erstellt. Infolgedessen ist die Buchse mittels der Öse stabilisiert und eine Entfernung der Buchse aus der Öse bei Einführen der Achse in die Buchse ist verhindert, was eine Montage weiter erleichtert. Auch ist ein Kraftübertrag zwischen dem ersten Teilkörper und der Achse auf diese Weise verbessert und eine Schwingungsamplitude der Achse im Betrieb verringert. Geeigneterweise ist die Buchse aus einem Kunststoff gefertigt, insbesondere in einem Kunststoffspritzgussverfahren. Somit sind Herstellungskosten gering. Auch erfolgt aufgrund der Buchse im Wesentlichen keine Änderung der magnetischen Eigenschaften des Rotors. Der Kunststoff ist zum Beispiel ein Thermoplast, insbesondere Polytetrafluorethylen (PTFE). Aufgrund der vergleichsweise geringen Reibungskoeffizienten ist hierbei ein Einführen der Achsen vereinfacht.

Die Öse ist insbesondere ring- oder hohlzylindrisch ausgestaltet. Geeigneterweise ist die Ausdehnung der Öse in axialer Richtung gleich der Ausdehnung des vollständigen ersten Teilkörpers in axialer Richtung. Alternativ oder besonders bevorzugt in Kombination hierzu ist die Lasche ring- oder hohlzylindrisch ausgestaltet, wobei die Länge der Lasche in axialer Richtung zweckmäßigerweise der Länge des zweiten Teilkörpers in axialer Richtung entspricht. Zweckmäßigerweise ist der Außendurchmesser der Öse gleich dem Außendurchmesser der Lasche. Geeigneterweise fluchten hierbei die Außendurchmesser der Öse und der Lasche. Infolgedessen ist ein Kraftfluss verbessert, und eine plastische oder elastische Verformung der Öse oder Lasche bei Ausüben einer Kraft zum Aufeinanderpressen der beiden Teilkörper ist vermieden, sodass ein vergleichsweise sicheres Aneinanderfügen der beiden Teilkörper ermöglicht ist. Zudem ist aufgrund der vergleichsweise hohen möglichen Anpresskraft eine Robustheit des Rotors erhöht.

Der erste Teilkörper ist ein Blechpaket. Ferner ist der zweite Teilkörper ein Blechpaket. Die einzelnen Bleche jedes der Teilkörper sind geeigneterweise zueinander baugleich und beispielsweise einstückig. Die Bleche jedes Blechpakets sind in axialer Richtung übereinander gestapelt, wobei zweckmäßigerweise eine Außenbegrenzung und/oder etwaige Taschen miteinander fluchten. Beispielsweise ist jede Lage mittels einzelner Blechsegmente erstellt. Besonders bevorzugt jedoch ist jede Lage des Blechpakets einstückig, sodass jedes Blechpaket genauso viele Bleche aufweist wie Lagen, und weswegen somit sämtliche Bleche in axialer Richtung übereinander gestapelt sind. Beispielsweise ist die Dicke der Blechlagen, insbesondere der einzelnen Bleche, in axialer Richtung zwischen 1 mm und 0,1 mm, zwischen 0,8 mm und 0,2 mm und beispielsweise im Wesentlichen gleich 0,5 mm.

Die Bleche sind insbesondere aus einem Eisen erstellt, zum Beispiel Transformatorblech. Beispielsweise sind die Bleche außenseitig mit einer elektrischen Isolierung versehen, insbesondere mit einem Lack. Beispielsweise weist jeder der Teilkörper zwischen 1.000 Blechen und 2.000 Blechen, zwischen 1.200 Blechen und 1.800 Blechen und insbesondere im Wesentlichen gleich 1.500 Bleche auf, wobei beispielsweise eine Abweichung von 200 Blechen, 100 Blechen oder 0 Blechen vorhanden ist. Die einzelnen Bleche sind zweckmäßigerweise miteinander verbacken. Hierfür sind die Bleche geeigneterweise mit einer Beschichtung versehen, die bei Erhitzung zumindest teilweise verflüssigt wird. Somit haften die einzelnen Bleche, nachdem sie aufeinander gestapelt, erhitzt und erneut abgekühlt wurden, bereits aneinander, was eine Montage vereinfacht.

Beispielsweise weist der erste Teilkörper und der zweite Teilkörper jeweils einen sich axial erstreckenden ersten Hohlzylinder und einen sich axial erstreckenden zweiten Hohlzylinder auf. Mit anderen Worten weist sowohl der erste Teilkörper als auch der zweite Teilkörper die beiden Hohlzylinder auf. Hierbei umgibt der zweite Hohlzylinder den ersten Hohlzylinder umfangsseitig und ist geeigneterweise von diesem beabstandet. Der zweite Hohlzylinder ist zweckmäßigerweise konzentrisch zum ersten Hohlzylinder und/oder zur Welle angeordnet. Der erste Hohlzylinder ist vorzugsweise konzentrisch zur Welle angeordnet und liegt beispielsweise an dieser an, geeigneterweise direkt. Insbesondere weist der erste Hohlzylinder eine Nut zur Aufnahme einer Passfeder zur Übertragung des Drehmoments zwischen der Welle und dem Rotorkörper jeweils auf. Beispielsweise liegen die etwaigen (Permanent-)Magneten an dem zweiten Hohlzylinder an und/oder an dem zweiten Hohlzylinder sind radial nach außen gerichtete Vorsprünge angeordnet, mittels derer die etwaigen Magnete gehalten und/oder stabilisiert sind.

Die beiden Hohlzylinder jedes Teilkörpers sind mittels radial verlaufender Speichen miteinander verbunden, die geeigneterweise an dem ersten Hohlzylinder und/oder dem zweiten Hohlzylinder befestigt sind. Insbesondere sind die Speichen an dem ersten Hohlzylinder und dem zweiten Hohlzylinder angeformt. Die Speichen erstrecken sich in axialer Richtung und weisen geeigneterweise die gleiche axialer Ausdehnung wie der erste bzw. zweite Hohlzylinder des jeweiligen Teilkörpers auf. Zwischen dem ersten Hohlzylinder und dem zweiten Hohlzylinder sind insbesondere Öffnungen gebildet, die zum Beispiel mit Luft gefüllt sind. Aufgrund dessen ist ein Gewicht des Rotors verringert, weswegen eine Trägheit verringert und somit eine Dynamik der elektrischen Maschine erhöht ist.

Beispielsweise weist jeder der Teilkörper zwischen 4 Speichen und 100 Speichen, zwischen 10 Speichen und 80 Speichen, zwischen 20 Speichen und 50 Speichen auf. Besonders bevorzugt fluchten die Speichen des ersten Teilkörpers mit den Speichen des zweiten Teilkörpers. Alternativ oder besonders bevorzugt in Kombination hierzu fluchtet der erste Hohlzylinder des ersten Teilkörpers mit dem ersten Hohlzylinder des zweiten Teilkörpers und/oder der zweite Hohlzylinder des ersten Teilkörpers fluchtet mit dem zweiten Hohlzylinder des zweiten Teilkörpers. Besonders bevorzugt fluchten die Speichen, der erste Hohlzylinder und der zweite Hohlzylinder der beiden Hohlkörper miteinander. Infolgedessen ist eine Kraftübertragung mit der Achse in axialer Richtung auf die beiden Teilkörper verbessert, und es erfolgt im Wesentlichen keine Verformung der beiden Teilkörper.

Die Achse ist insbesondere zwischen dem ersten Hohlzylinder und dem zweiten Hohlzylinder angeordnet und vorzugsweise zu beiden Hohlzylindern beabstandet. Vorzugsweise ist die Öse und/oder die Lasche an zumindest einer der jeweiligen Speichen angebunden, was eine Konstruktion weiter vereinfacht. Aufgrund einer derartigen Anordnung der Achse ist es ermöglicht, die etwaig vorhandenen Magnete im Wesentlichen unabhängig von der Achse zu positionieren. Zudem ist eine Verfälschung eines Magnetfelds aufgrund der Achse im Wesentlichen ausgeschlossen. Auch ist es ermöglicht, eine korrekte Montage der Achse aufgrund der zwischen den beiden Hohlzylindern gebildeten Öffnungen zu kontrollieren.

Besonders bevorzugt umfasst der Rotor einen dritten Hohlzylinder, der sich axial erstreckt und der insbesondere konzentrisch zu dem ersten Hohlzylinder und/oder dem zweiten Hohlzylinder ist. Der dritte Hohlzylinder ist zwischen dem ersten und dem zweiten Hohlzylinder angeordnet und zu diesen insbesondere beabstandet. Die Speichen schneiden den dritten Hohlzylinder. Aufgrund des dritten Hohlzylinders ist es ermöglicht, den Abstand zwischen dem ersten Hohlzylinder und dem zweiten Hohlzylinder vergleichsweise groß zu wählen, wobei eine Stabilisierung mittels des dritten Hohlzylinders erfolgt. Insbesondere schneidet der dritte Hohlzylinder zumindest teilweise die Öse oder Lasche. Geeigneterweise weist der dritte Hohlzylinder die Öse bzw. Lasche auf. Vorzugsweise weist zusätzlich zumindest eine der Speichen die Öse bzw. Lasche auf. Die Speichen verlaufen beispielsweise sowohl radial als auch tangential, insbesondere lediglich in eine tangentiale Richtung oder in beide tangentiale Richtungen, also in und gegen den Uhrzeigersinn. Hierbei sind vorzugsweise jeweils benachbarte Speichen endseitig aneinander angebunden, was eine Stabilität erhöht. Alternativ oder in Kombination hierzu schneiden sich beispielsweise Speichen zwischen deren Freienden, was die Stabilität noch weiter erhöht.

Geeigneterweise umfasst der Rotor eine zweite Achse, und der zweite Teilkörper weist eine Öse auf, innerhalb derer eine Buchse angeordnet ist. Somit weist sowohl der erste Teilkörper als auch der zweite Teilkörper jeweils die Öse auf, wobei in der jeweiligen Öse jeweils die zugeordnete Buchse angeordnet ist. Die Buchse ist wiederum hohlzylindrisch ausgestaltet, und die Öse umgibt die Buchse insbesondere umfangsseitig. Der erste Teilkörper weist ferner eine Lasche auf. Im Montagezustand nimmt die Buchse des zweiten Teilkörpers die zweite Achse auf, und die Lasche des ersten Teilkörpers nimmt die zweite Achse auf. Die zweite Achse ist parallel zur Achse und/oder zur Welle ausgerichtet und beispielsweise baugleich zur Achse. Die zweite Achse reicht vorzugsweise durch den zweiten Teilkörper und den ersten Teilkörper hindurch und ist bezüglich der Welle insbesondere radial nach außen versetzt. Beispielsweise ist die zweite Achse punktsymmetrisch bezüglich der Rotationsachse der Welle zur Achse angeordnet. Mit anderen Worten ist die zweite Achse bezüglich der Rotationsachse zur Achse um 180° versetzt und daher gegenüber angeordnet. Aufgrund der zweiten Achse ist eine Stabilität des Rotors erhöht, wobei die Position des ersten Teilkörpers mittels der Lasche vergleichsweise präzise vorgegeben ist. Mittels der dem ersten Teilkörper zugeordneten Buchse erfolgt ein Toleranzausgleich. Beim zweiten Teilkörper erfolgt mittels der zweiten Achse und der Buchse der Toleranzausgleich wohingegen mittels der Lasche des zweiten Teilkörpers und der Achse die vergleichsweise präzise Positionierung erfolgt. Insbesondere sind die Buchsen baugleich, was zu verringerten Herstellungskosten führt. Vorzugsweise liegt die Buchse umfangsseitig an einem Abschnitt der zweiten Achse an, insbesondere mechanisch direkt. Die Lasche des ersten Teilkörpers liegt besonders bevorzugt mechanisch direkt an der zweiten Achse an und umgibt diese zumindest umfangsseitig abschnittsweise.

Besonders bevorzugt sind die beiden Teilkörper zueinander baugleich. Infolgedessen können vergleichsweise viele Gleichteile verwendet werden, was Herstellungskosten reduziert. Beispielsweise ist der erste Teilkörper bezüglich des zweiten Teilkörpers um einen bestimmten Winkel verdreht, beispielsweise 180° um die Rotationsachse, sodass die Öse und Buchse des zweiten Teilkörpers der Lasche des ersten Teilkörpers und die Öse und Buchse des ersten Teilkörpers der Lasche des zweiten Teilkörpers zugeordnet sind. Deren mittige Aussparung fluchten insbesondere jeweils, was ein Einsetzen der ersten und zweiten Achse erleichtert.

Geeigneterweise weist der erste Teilkörper eine erste Anzahl derartiger Ösen auf, innerhalb derer jeweils eine Buchse angeordnet ist. Hierbei ist insbesondere jeder Öse eine der Buchsen zugeordnet, die zweckmäßigerweise zueinander baugleich sind und/oder vorzugsweise hohlzylindrisch ausgestaltet sind, und deren Achse insbesondere parallel zu einer Rotationsachse der Welle ist. Der zweite Teilkörper weist die erste Anzahl derartiger Laschen auf. Mit anderen Worten weist der erste Teilkörper genauso viele Ösen wie der zweite Teilkörper Laschen auf. Ferner weist der Rotor die erste Anzahl an Achsen auf, die bezüglich der Welle radial nach außen versetzt und parallel zur Rotationsachse, also parallel zur axialen Richtung, angeordnet sind. Insbesondere ist der Abstand der Achsen zur Rotationsachse der Welle konstant. Der erste Teilkörper und der zweite Teilkörper sind mittels der Achsen aneinander gefügt, wobei mittels der Achsen insbesondere ein Anpressdruck der beiden Teilkörper aufeinander zu erstellt ist. Hierfür ist jeweils eine der Achsen einer der Ösen und einer der Laschen zugeordnet, sodass jede Buchse und jede Lasche jeweils eine der Achsen aufnimmt. Aufgrund der ersten Anzahl an Achsen ist die Robustheit des Rotors erhöht, und es kann ein vergleichsweise großer Anpressdruck aufgebaut werden.

Geeigneterweise sind die Achsen bezüglich der Rotationsachse dreh- oder punktsymmetrisch angeordnet. Infolgedessen ist insbesondere ein Verkippen der beiden Teilkörper aufgrund einer ungleichmäßig ausgeübten Kraft mittels der Achsen vermieden. Insbesondere ist die erste Anzahl größer oder gleich 2, 3, 4, 5 oder 6. Insbesondere ist die erste Anzahl kleiner oder gleich 15, 14, 13 oder 12. Besonders bevorzugt ist die erste Anzahl gleich 5. Mit anderen Worten weist der Rotor 5 derartige Achsen, der erste Teilkörper 5 derartige Ösen und der zweite Teilkörper 5 derartige Laschen auf.

Beispielsweise umfasst der Rotor eine weitere Anzahl an zweiten Achsen, und der zweite Teilkörper weist eine weitere Anzahl an derartigen Ösen auf, innerhalb derer jeweils eine Buchse angeordnet ist, und der erste Teilkörper weist eine weitere Anzahl an Laschen auf. Hierbei nimmt jede Buchse, die dem zweiten Teilkörper zugeordnet ist, und jede Lasche der ersten Teilkörpers jeweils eine der zweiten Achsen auf. Somit ist einerseits eine vergleichsweise präzise Positionierung der beiden Teilkörper als auch ein Toleranzausgleich und somit eine verringerte mechanische Belastung auf diese geschaffen, wobei die beiden Teilkörper in axialer Richtung dennoch vergleichsweise sicher aneinander gefügt sind. Insbesondere ist in tangentialer Richtung zwischen jeweils benachbarten Achsen eine der zweiten Achsen angeordnet. Alternativ oder in Kombination hierzu ist insbesondere der Abstand der zweiten Achsen zur Rotationsachse konstant und geeigneterweise gleich dem Abstand der Achsen zu der Rotationsachse.

Geeigneterweise weist der Rotorkörper eine zweite Anzahl an ersten Teilkörpern und/oder eine dritten Anzahl an zweiten Teilkörpern auf. Hierbei sind die ersten Teilkörper bezüglich der zweiten Teilkörper in Axialrichtung abwechselnd angeordnet. Beispielsweise weist der Rotorkörper lediglich einen ersten Teilkörper, jedoch zwei Teilkörper oder lediglich einen einzigen zweiten Teilkörper aber zwei erste Teilkörper auf. Besonders bevorzugt weist der Rotorkörper mehrere erste Teilkörper und mehrere zweite Teilkörper auf, wie insbesondere zwei erste Teilkörper und drei zweite Teilkörper. Insbesondere ist jeder erste Teilkörper in Axialrichtung von jeweils einem der zweiten Teilkörper umgeben. Aufgrund der erhöhten Anzahl an Teilkörpern weist der Rotorkörper eine vergleichsweise große Ausdehnung in axialer Richtung auf, wobei die Länge der einzelnen Teilkörper in Axialrichtung verkürzt ausgeführt werden kann. Dies erleichtert das Einführen der Achse, weswegen eine Montage vereinfacht ist.

Geeigneterweise weist der Rotor einen baugleichen zweiten Rotorkörper auf, der also baugleich zu dem Rotorkörper ist. Der zweite Rotorkörper ist in axialer Richtung an den Rotorkörper gefügt. Zudem weist sowohl der Rotorkörper als auch der zweite Rotorkörper jeweils die Magnete auf, die beispielsweise in Tangentialrichtung magnetisiert sind. Hierbei sind die Magnete des ersten Rotorkörpers und des zweiten Rotorkörpers in tangentialer Richtung zueinander versetzt, sodass diese nicht miteinander fluchten. Aufgrund des Versatzes ist ein Rastmoment des Rotors verringert und ein Drehmomentverlauf vergleichmäßigt. Beispielsweise ist der zweite Rotorkörper bezüglich des Rotorkörpers um einen bestimmten Winkel versetzt auf die Welle aufgesetzt. Mit anderen Worten ist der zweite Rotorkörper bezüglich des Rotorkörpers um einen Drehwinkel parallel zur Rotorachse verdreht. Besonders bevorzugt jedoch ist der zweite Rotorkörper mittels einer Drehung von 180° um eine radial verlaufende, also senkrecht zur Rotationsachse, Gerade, auf dem Rotorkörper abbildbar. Aufgrund der Baugleichheit sind Herstellungskosten reduziert. Beispielsweise weist der Rotor weitere Rotorkörper auf, insbesondere drei, vier oder fünf Rotorkörper oder mehr Rotorkörper. Sämtliche Rotorkörper sind zweckmäßigerweise in axialer Richtung aneinander gefügt. Beispielsweise sind die Magnete sämtlicher Rotorkörpers in tangentialer Richtung zueinander versetzt. Zumindest jedoch sind bevorzugt die Magnete von in axialer Richtung direkt zueinander benachbarten Rotorkörpern in tangentialer Richtung zueinander versetzt.

Vorzugsweise ist an dem Rotorkörper stirnseitig eine Abdeckung angeordnet, welche beispielsweise den Rotorkörper vollständig überdeckt. Geeigneterweise fluchtet die Abdeckung mit dem Rotorkörper. Mit anderen Worten ist die Abdeckung bezüglich des Rotorkörpers in axialer Richtung versetzt und an dessen Ende angeordnet. Insbesondere ist der Rotorkörper mittels der Abdeckung abgedeckt. Vorzugsweise liegt die Abdeckung mechanisch direkt am Rotorkörper, insbesondere an einem der Teilkörper an. Beispielsweise ist der Rotorkörper beidseitig mittels jeweils einer Abdeckung abgedeckt, die somit stirnseitig beidseitig des Rotorkörpers angeordnet sind. Sofern zwei Rotorkörper vorhanden sind, ist insbesondere jeder der Rotorkörper an der dem jeweils anderen Rotorkörper abgewandten Stirnseite mittels jeweils einer der Abdeckungen abgedeckt. An der Abdeckung ist die Achse befestigt. Somit wird mittels der Achse auf die Abdeckung eine Kraft ausgeübt, welche auf den Rotorkörper ausgeübt wird. Auf diese Weise erfolgt mittels der Achse eine vergleichsweise großflächige Ausübung von Kraft, weswegen ein Verformen der Teilkörper aufgrund einer punktuell ausgeübten Kraft im Wesentlichen vermieden ist. Geeigneterweise ist die Achse an zwei Abdeckungen angebunden, insbesondere befestigt, wobei sich der Rotorkörper zwischen den Abdeckungen befindet. Hierbei wird mittels der Achse der Abstand der Abdeckungen zueinander und somit die Anpresskraft der beiden Teilkörper aufeinander eingestellt. Zweckmäßigerweise ist die Abdeckung aus einem Stahl erstellt, was eine Robustheit erhöht.

Alternativ oder besonders bevorzugt in Kombination hierzu ist die Achse eine Gewindestange. Auf diese Weise ist einerseits ein Einbringen in die Buchse bzw. Lasche vereinfacht, da dies beispielsweise mittels Drehen der Achse erfolgen kann. Andererseits ist ein vergleichsweise präzises Einstellen der auf den Rotorkörper ausgeübten Kraft mittels der Achse ermöglicht. Insbesondere ist die Gewindestange in die Abdeckung eingedreht, sodass mittels Drehen der Achse die mittels der Abdeckung auf den Rotorkörper ausgeübte Kraft eingestellt ist. Beispielsweise weist die Abdeckung eine Bohrung mit einem Gewinde auf. Alternativ weist die Abdeckung beispielsweise eine Mutter auf, die vorzugsweise an weiteren Bestandteilen der Abdeckung befestigt ist, beispielsweise geschweißt. Insbesondere weist die Gewindestange einen Kopf auf, sodass diese nach Art einer Schraube ausgestaltet ist. Alternativ sind beispielsweise endseitig jeweils Muttern auf die Gewindestange aufgesetzt und mittels der Muttern und deren Position entlang der Gewindestange wird insbesondere eine Kraft auf den Rotorkörper, zum Beispiel über die Abdeckung, eingestellt.

Ferner betrifft die Erfindung ein Verfahren zur Herstellung eines Rotors. Hierbei wird zunächst die Welle bereitgestellt und beispielsweise die Abdeckung auf diese aufgesetzt. Ferner werden die Teilepakete bereitgestellt, die insbesondere jeweils Blechpakete sind. Zweckmäßigerweise werden die beiden Teilkörper miteinander verbacken. In die Ösen des ersten Teilkörpers wird die Buchse eingesetzt und der erste und der zweite Teilkörper werden auf die Welle aufgesetzt. Im Anschluss hieran wird beispielsweise die weitere Abdeckung auf die Welle aufgesetzt. Ferner wird die Achse in die Lasche des zweiten Teilkörpers und die Buchse eingeführt. Mittels geeigneter Hilfsmittel, wie insbesondere der Abdeckung und/oder der etwaiger Muttern, werden mittels der Achse die beiden Teilkörper in axialer Richtung aufeinander zu gepresst.

Die elektrische Maschine ist beispielsweise ein Generator oder besonders bevorzugt ein Elektromotor, wie ein bürstenloser Elektromotor. Insbesondere ist die elektrische Maschine eine Synchronmaschine. Die elektrische Maschine weist beispielsweise eine Leistung zwischen 30 kW und 150 kW, zwischen 40 kW und 140 kW und beispielsweise zwischen 60 kW und 100 kW auf. Geeigneterweise ist die Nenndrehzahl oder maximale Drehzahl zwischen 200 1/min und 8000 1/min. Besonders bevorzugt ist das Drehmoment der elektrischen Maschine, welches beispielsweise ein Maximales- und/oder Nenndrehmoment ist, zwischen 100 Newtonmeter und 20.000 Newtonmeter. Die elektrische Maschine ist beispielsweise ein Bestandteil einer Servopresse, eines Schiffsantriebs oder einer Maschine zur Herstellung oder Verarbeitung von Kunststoff, wie einer Kunststoffspritzgussmaschine oder eines Extruders. Vorzugsweise umfasst die elektrische Maschine einen Umrichter, welcher insbesondere eine Brückenschaltung aufweist, wie eine B6-Schaltung. Hierbei ist die elektrische Maschine zweckmäßigerweise dreiphasig aufgebaut. Die elektrische Maschine weist einen Rotor und einen diesen umfangsseitig umgebenen Stator auf. Mit anderen Worten ist die elektrische Maschine ein Innenläufer. Der Stator weist zweckmäßigerweise eine Anzahl an Elektromagneten auf, die beispielsweise mittels des etwaigen Umrichters bestromt sind. Die Elektromagneten sind hierbei beispielsweise durch eine Dreiecks- oder Sternschaltung miteinander verschalten. Vorzugsweise ist die elektrische Maschine dreiphasig ausgestaltet. Der Elektromotor ist bevorzugt ein Torque-Motor mit einer integrierten Elektronik, und der Umrichter ist insbesondere aufgesetzt, zweckmäßigerweise auf ein B-seitiges Lagerschild. Unter Torque-Motor wird insbesondere ein hochpoliger, elektrischer Direktantrieb aus der Gruppe der Langsamläufer verstanden. Zweckmäßigerweise weist der Torque-Motor mehr als 20, 40 oder 60 Pole auf.

Der Stator umgibt umfangsseitig einen Rotor, der eine Welle und einen die Welle umfangsseitig umgebenen Rotorkörper aufweist. Der Rotorkörper umfasst einen ersten Teilkörper und einen zweiten Teilkörper, die in axialer Richtung mittels einer sich in axialer Richtung erstreckenden und bezüglich der Welle radial nach außen versetzten Achse aneinander gefügt sind. Der erste Teilkörper weist eine Öse auf, innerhalb derer eine die Achse aufnehmende Buchse angeordnet ist. Der zweite Teilkörper umfasst eine die Achse aufnehmende Lasche. Die Welle ist beispielsweise aus einem Stahl hergestellt und insbesondere eine Vollwelle. Alternativ hierzu ist die Welle eine Hohlwelle. Geeigneterweise umfasst die elektrische Maschine zumindest ein Lager, mittels dessen die Welle drehbar um eine Achse gelagert ist. Vorzugsweise umfasst die elektrische Maschine zwei Lager, welche sich in axialer Richtung auf gegenüberliegenden Seiten des Rotorkörpers befinden. Die Lager sind insbesondere Wälzlager, wie Kugel- oder Zylinderlager. Die Lager sind vorzugsweise an jeweils einem Lagerschild angebunden, mittels derer jeweils beispielsweise ein Gehäuse der elektrischen Maschine stirnseitig verschlossen ist. Insbesondere sind die Lagerschilde im Wesentlichen senkrecht zu der Achse der Welle angeordnet.

Die im Zusammenhang mit dem Rotor ausgeführten Weiterbildungen und Vorteile sind sinngemäß auch auf die elektrische Maschine/die Herstellung des Rotors zu übertragen und umgekehrt.

Nachfolgend werden Ausführungsbeispiele der Erfindung anhand einer Zeichnung näher erläutert. Darin zeigen:
- Fig. 1: schematisch in einer Schnittdarstellung einen Elektromotor mit einem Rotor,
- Fig. 2: schematisch vereinfacht den Rotor in einer Schnittdarstellung,
- Fig. 3: perspektivisch einen Teilkörper eines Rotorkörpers,
- Fig. 4: in einer Schnittdarstellung einen Ausschnitt des Rotorkörpers,
- Fig. 5: perspektivisch einen weiteren Ausschnitt des Rotorkörpers,
- Fig. 6, 7: schematisch und perspektivisch eine weitere Ausführungsform des Rotors mit zwei Rotorkörpern,
- Fig. 8 -12: jeweils in einer Draufsicht unterschiedliche Ausführungsformen des Rotorkörpers,
- Fig. 13, 14: ausschnittsweise und in einer Draufsicht eine weitere Ausführungsform des Rotorkörpers,
- Fig. 15, 16: ausschnittsweise und in einer Draufsicht eine weitere Ausführungsform des Rotorkörpers, und
- Fig. 17, 18: ausschnittsweise und in einer Draufsicht eine letzte Ausführungsform des Rotorkörpers,

Einander entsprechende Teile sind in allen Figuren mit den gleichen Bezugszeichen versehen.

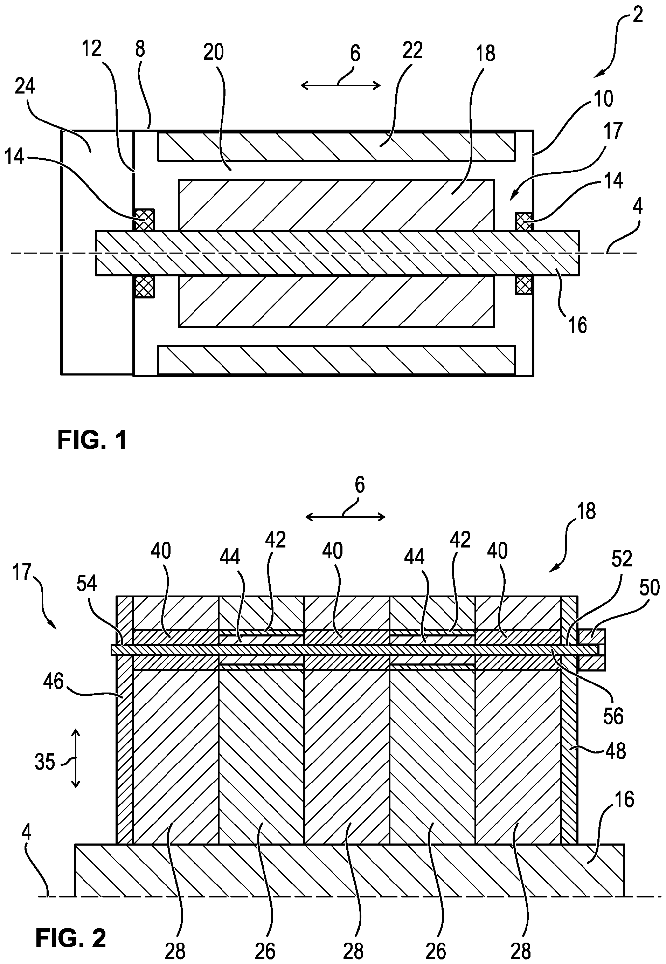

In Figur 1 ist schematisch vereinfacht eine elektrische Maschine 2 in Form eines bürstenlosen Elektromotors in eine Schnittdarstellung entlang einer Rotationsachse 4 gezeigt, die parallel zu einer axialen Richtung 6 ist. Die elektrische Maschine 2 weist ein hohlzylindrisches Gehäuse 8 auf, welches sich in axialer Richtung 6 erstreckt, und stirnseitig mittels eines A-seitigen Lagerschilds 10 und eines B-seitigen Lagerschilds 12 verschlossen ist. An den beiden Lagerschilden 10, 12 ist jeweils ein Kugellager 14 befestigt, mittels dessen eine Welle 16 eines Rotors 17 drehbar um die Rotationsachse 4 gelagert ist. Hierbei ist die Welle 16 als Vollzylinder ausgestaltet, der konzentrisch zur Rotationsachse 4 angeordnet und aus einem Stahl, wie Edelstahl oder einem anderen Stahl, gefertigt ist. An der Welle 16 ist ein Rotorkörper 18 befestigt, der die Welle 16 umfangsseitig umgibt, und der zwischen den beiden Kugellagern 14 angeordnet ist. Hierbei liegt der Rotorkörper 18 mechanisch direkt an der Welle 16 an. Der Rotorkörper 18 ist umfangsseitig unter Außenbildung eines Luftspalts 20 von einem Stator 22 umgeben, welcher an der Innenseite des Gehäuses.8 befestigt ist.

Der Stator 22 weist eine Anzahl an nicht näher dargestellten Elektromagneten in Form von elektrischen Spulen auf, die mittels eines Umrichters 24 bei Betrieb bestromt werden, welcher stirnseitig auf der dem Rotor 17 gegenüberliegenden Seite des B-seitigen Lagerschilds 12 angebunden ist. Der Stator 22 weist insgesamt sechsunddreißig Spulengruppen mit jeweils zwei elektrischen Spulen auf.

Die Bestromung der Elektromagneten erfolgt in Abhängigkeit der aktuellen Stellung des Rotors 17 bezüglich des Stator 22, was mittels eines nicht näher dargestellten Drehgebers ermittelt wird, welche an der Welle 16 und dem Umrichter 24 oder dem B-seitigen Lagerschild 12 angebunden ist. An dem Bereich der Welle 16, welcher durch das A-seitige Lagerschild 10 hindurch reicht, ist im Montagezustand ein weiterer Bestandteil einer Presse angebunden, sodass mittels Bestromung des Stators 22 die Presse bewegt wird. Hierbei wird mittels des Elektromotors 2 ein Drehmoment von 17.500 Newtonmetern (Nm) bereitgestellt. Der Elektromotor 2 ist bevorzugt ein Torque-Motor mit integrierter Elektronik, und der Umrichter 24 ist insbesondere aufgesetzt, zweckmäßigerweise auf das B-seitige Lagerschild 12.

In Fig. 2 ist in einer Schnittdarstellung ausschnittsweise schematisch vereinfacht der Rotor 17 mit der Welle 16 und dem Rotorkörper 18 gezeigt. Der Rotorkörper 18 weist eine zweite Anzahl an ersten Teilkörpern 26 auf, wobei die zweite Anzahl gleich 2 ist. Ferner weist der Rotorkörper 18 eine dritte Anzahl an zweiten Teilkörpern 28 auf, wobei die dritte Anzahl gleich 3 ist. Die ersten Teilkörper 26 und die zweiten Teilkörper 28 sind in axialer Richtung 6 abwechselnd angeordnet, sodass die beiden ersten Teilkörper 26 in axialer Richtung 6 von jeweils einem der zweiten Teilkörper 28 umgeben sind. Die Teilkörper 26, 28 sind auf die Welle 16 aufgesetzt und bilden im Wesentlichen den Rotorkörper 18. Jeder der Teilkörper 26, 28 ist jeweils ein Blechpaket mit hier nicht näher dargestellten Blechen, die in axialer Richtung 6 aufeinander gestapelt sind.

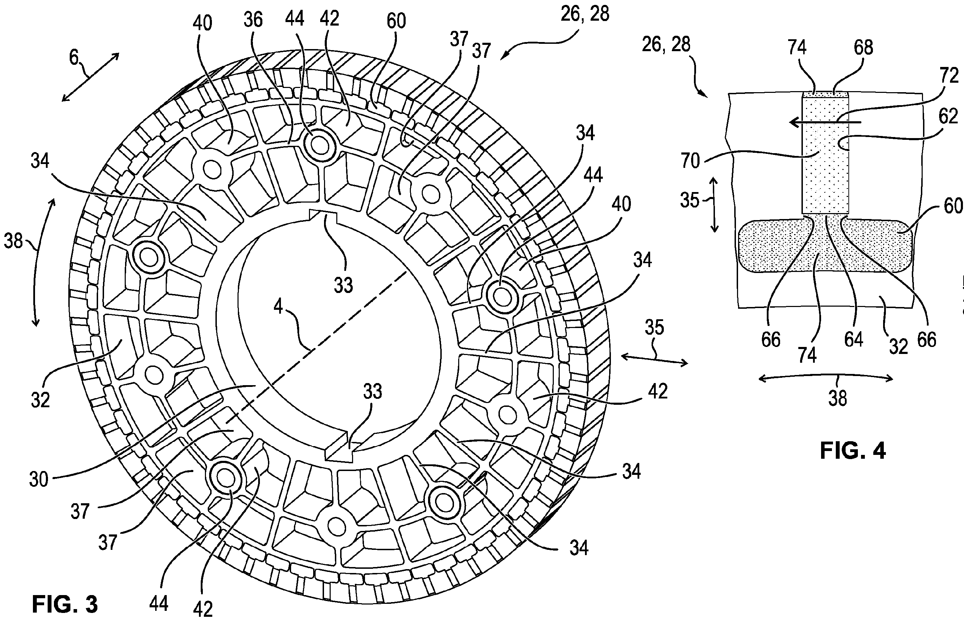

Die Teilkörper 26, 28 sind baugleich, und in Fig. 3 ist eines dieser Teilkörper 26, 28 perspektivisch gezeigt. So weist jeder Teilkörper 26, 28 einen sich in axialer Richtung 6 erstreckenden ersten Hohlzylinder 30 und einen diesen umfangsseitig umgebenen und sich axial erstreckenden zweiten Hohlzylinder 32 auf. Der erste Hohlzylinder 30 weist auf der dem zweiten Hohlzylinder 32 abgewandten Oberfläche zwei sich in axialer Richtung 6 erstreckende Nuten 33 auf, die zueinander bezüglich der Rotationsachse 4 um 180° versetzt sind. Innerhalb der Nuten 33 ist im Montagezustand eine Passfeder eingesetzt, die ebenfalls in einer weiteren Nut der Welle 16 positioniert ist. Im Montagezustand umgibt der erste Hohlzylinder 30 die Welle 16 umfangsseitig und liegt an dieser mechanisch direkt an.

Der erste Hohlzylinder 30 und der zweite Hohlzylinder 32 sind mittels radial verlaufender Speichen 34 miteinander verbunden. Mit anderen Worten verläuft jede der Speichen in einer radialen Richtung 35, wobei die radiale Richtung 35 mittels der Rotationsachse 4 definiert ist. Die beiden Hohlzylindern 30, 32 sowie die Speichen 34 werden hierbei mittels jedes Blechs des jeweiligen Teilkörpers 26, 28 gebildet. Der zweite Hohlzylinder 32 ist konzentrisch zu dem ersten Hohlzylinder 30 und der Rotationsachse 4 angeordnet.

Ferner ist zwischen dem ersten Hohlzylinder 30 und dem zweiten Hohlzylinder 32 ein sich axial erstreckender dritter Hohlzylinder 36 angeordnet, der konzentrisch zur Rotationsachse 4 und sowohl von dem ersten Hohlzylinder 30 als auch von dem zweiten Hohlzylinder 32 beabstandet ist. Der dritte Hohlzylinder 36 wird von den Speichen 34 geschnitten, sodass zwischen den Hohlzylindern 30, 32, 36 und den Speichen mehrere Öffnungen 37 gebildet sind. Daher ist ein Gewicht des Rotorkörpers 18 vergleichsweise gering. An jedem zweiten Schnittpunkt des dritten Hohlzylinders 36 mit einer der insgesamt zwanzig Speichen 34 in tangentialer Richtung 38 ist entweder eine Lasche 40 oder eine Öse 42 positioniert. Folglich weist jeder Teilkörper 26, 28 insgesamt fünf Laschen 40 und fünf Ösen 42 auf. Jede Lasche 40 ist ein Hohlzylinder, der sich in axialer Richtung 6 erstreckt. Auch jede Öse 42 ist ein Hohlzylinder, der sich in axialer Richtung 6 erstreckt, wobei der Außendurchmesser der Ösen 42 gleich dem Außendurchmesser der Laschen 40 ist. Der Innendurchmesser der Laschen 40 ist jedoch im Vergleich zum Innendurchmesser der Ösen 42 verringert. Die Laschen 40 und die Ösen 42 weisen den gleichen Abstand zur Rotationsachse 4 auf.

Innerhalb jeder der Ösen 42 ist jeweils eine Buchse 44 eingepresst, sodass die jeweilige Buchse 44 mit der jeweiligen Öse 42 verpresst ist. Jede Buchse 44 ist ein Hohlzylinder, der aus einem Kunststoff, nämlich Polytetrafluorethylen (PTFE) gefertigt ist, und der sich in axialer Richtung 6 erstreckt. Der Außendurchmesser der gleichartigen Buchsen 44 ist geringfügig größer als der Innendurchmesser der Öse 42, sodass bei Montage zwischen diesen ein Kraftschluss erstellt ist.

Zusammenfassend weist der erste Teilkörper 26 eine erste Anzahl von Ösen 42 auf, innerhalb derer jeweils eine der Buchsen 44 angeordnet ist, wobei die erste Anzahl gleich 5 ist. Der zweite Teilkörper 28 weist ebenfalls fünf derartige Ösen 42 auf, innerhalb derer jeweils eine der Buchsen 44 angeordnet ist. Auch weist der zweite Teilkörper 28 die erste Anzahl an Laschen 40 auf, und auch der erste Teilkörper weist die erste Anzahl an Laschen 40 auf, nämlich fünf.

Der Rotorkörper 18 ist auf Seiten des A-seitigen Lagerschilds 10 mittels einer ersten Abdeckung 46 und auf Seiten des B-seitigen Lageschilds 12 mittels einer zweiten Abdeckung 48 abgedeckt, die somit den Rotorkörper 18 in axialer Richtung 6 umgeben und umfangsseitig mit diesem fluchten. Die beiden Abdeckungen 46, 48 sind ringförmige aus einem Edelstahl erstellte Scheiben und ebenfalls auf die Welle 16 aufgesetzt. Die beiden Abdeckungen 46, 48 liegen mechanisch direkt an der Welle 16 und den jeweils Äußersten der zweiten Teilkörpern 28 und somit mechanisch direkt an dem Rotorkörper 18 an. Die zweite Abdeckung 48 weist insgesamt zehn Muttern 50 auf, die sich auf der dem Rotorkörper 18 gegenüberliegenden Seite befinden, und die zur Rotationsachse 4 den gleichen Abstand aufweisen wie die Laschen 40 und die Ösen 42.

Ferner sind in die zweite Abdeckung 48 jeweils Löcher 52 eingebracht, die mit einer zentralen Ausnahme der Mutter 50 jeweils fluchten. Korrespondierend zu den Löchern 52 weist die erste Abdeckung 46 insgesamt zehn Bohrungen 54 auf, die drehsymmetrisch bezüglich der Rotationsachse 4 angeordnet sind und jeweils ein Innengewinde aufweisen.

Ferner weist der Rotor 17 fünf Achsen 56 in Form von Gewindestangen auf. Die Achsen 56 sind in axialer Richtung 6 angeordnet, und jede der Laschen 40 des zweiten Teilkörpers 28 ist eine der Achsen 56 zugeordnet und nimmt diese auf. Auch ist jeweils einer der dem ersten Teilkörper 26 zugeordneten Buchsen 44 jeweils eine der Achsen 56 zugeordnet, und jede der Buchsen 44 nimmt jeweils die zugeordnete Achse 56 auf. Infolgedessen erstreckt sich jede der Achsen 56 durch drei Laschen 40 sowie zwei der Buchsen 44. Der Innendurchmesser der Laschen 40 ist geringfügig größer als der Außendurchmesser der fünf baugleichen Achse 56, sodass zwischen sich ein Spiel einstellt. Zwischen jeder der den Achsen 56 zugeordneten Buchsen 44 ist eine Spielpassung erstellt.

Zur Montage werden zunächst die einzelnen Teilkörper 26, 28 geeignet positioniert und im Anschluss hieran die Gewindestange 56 durch die Laschen 40 sowie die Buchsen 44 eingeführt. Hierbei sind die Achsen 56 zwischen dem ersten Hohlzylinder 30 und dem zweiten Hohlzylinder 32 angeordnet. Somit sind die Achsen 56 auch bezüglich der Welle 16 in radialer Richtung 35 nach außen versetzt. Die Achsen 56 werden in jeweils eine der Muttern 50 der zweiten Abdeckung 58 und eine der Bohrungen 54 der ersten Abdeckung 46 eingedreht, sodass mittels dieser auf die beiden Abdeckungen 46, 48 eine Kraft in axialer Richtung 6 aufeinander zu ausgeübt wird. Infolgedessen werden auch die einzelnen Teilkörper 26, 28 aufeinander gepresst und sind folglich aneinander gefügt, wobei aufgrund der Achsen 56 eine Bewegung der Teilkörper 26, 28 zueinander unterbunden ist.

Ferner weist der Rotor 17 fünf zweite Achsen 58 auf, wobei jede zweite Achse 58 jeweils von den Laschen 40 der ersten Teilkörper 26 und den dem zweiten Teilkörper 28 zugeordneten Buchsen 44 aufgenommen ist. Auch die zweiten Achsen 58 sind jeweils in eine der Muttern 50 und eine der Bohrungen 54 eingedreht, sodass ebenfalls mittels der fünf zweiten Achsen 58 die beiden Abdeckungen 46, 48 in axialer Richtung 6 aufeinander zu gepresst sind.

In Fig. 4 ist der Rotorkörper 18 ausschnittsweise gezeigt. Dieser weist sich radial an den zweiten Hohlzylinder 32 nach außen anschließende Kammern 60 auf, die in den ersten sowie zweiten Teilkörper 26, 28 eingebracht sind. Hierbei bildet der zweite Hohlzylinder 32 den radial innenliegenden Boden der Kammern 60, die jeweils einen rechteckförmigen Querschnitt mit abgerundeten Ecken bezüglich der Rotationsachse 4 aufweisen. Hierbei verläuft die Hauptausdehnung des rechteckförmigen Querschnitts in tangentialer Richtung 38.

Die Kammern 60 sind voneinander mechanisch getrennt und somit nicht verbunden. Es sind insgesamt sechzig derartige Kammern 60 vorhanden, die drehsymmetrisch bezüglich der Rotationsachse 4 angeordnet sind. Zudem weist jeder der Teilkörper 26, 28 bezüglich jeder der Kammern 60 eine radial nach außen versetzte Tasche 62 auf, die in radialer Richtung 35 verläuft und einen rechteckförmigen Querschnitt aufweist. Die Hauptausdehnung des rechteckförmigen Querschnitts verläuft in radialer Richtung 35. Somit umfasst jeder der Teilkörper 26, 28 genauso viele Taschen 62 wie Kammern 60. Die Taschen 62 sind voneinander getrennt und mechanisch nicht verbunden.

Jede Tasche 62 selbst erstreckt sich in axialer Richtung 6 und reicht durch den jeweiligen Teilkörper 26, 28 vollständig hindurch. Jede Tasche 62 ist mittels eines axial verlaufenden Schlitzes 64 mit der zugeordneten, radial innnenliegenden Kammer 60 verbunden, wobei die Ausdehnung des Schlitzes 64 in tangentialer Richtung 38 im Vergleich zur Ausdehnung der Tasche 62 mittels zweier in tangentialer Richtung 38 gerichteter Vorsprünge 66 verringert ist. Die Ausdehnung der Kammer 60 in tangentialer Richtung 38 ist größer als die Ausdehnung der zugeordneten Tasche 62 in tangentialer Richtung 38. Mit anderen Worten steht die Kammer 60 in tangentialer Richtung 38 bezüglich der jeweils zugeordneten Tasche 62 in tangentialer Richtung 38 beidseitig über.

An jede Tasche 62 schließt sich auf der radialen Außenseite 35 eine Öffnung 68 an, mittels derer jede Tasche 62 geöffnet ist. Jede Öffnung 68 weist einen trapezförmigen Querschnitt senkrecht zur Rotationsachse 4 auf, sodass die in radialer Richtung 35 außenliegenden Bereiche aufeinander zu versetzt sind. Innerhalb jeder Tasche 62 ist jeweils ein in radialer Richtung 35 angeordneter quaderförmiger Magnet 70 angeordnet, der ein Permanentmagnet ist. Die Magnete 70 bestehen aus NdFeB. In einer nicht gezeigten Alternative sind die Magnete 70 aus einem Ferrit gesintert. Jeder der Teilkörper 26, 28 weist insgesamt sechzig Magnete 70 auf, und die elektrische Maschine 2 weist somit aufgrund der insgesamt fünf Teilkörper 26, 28 insgesamt dreihundert derartige Magnete 70 auf.

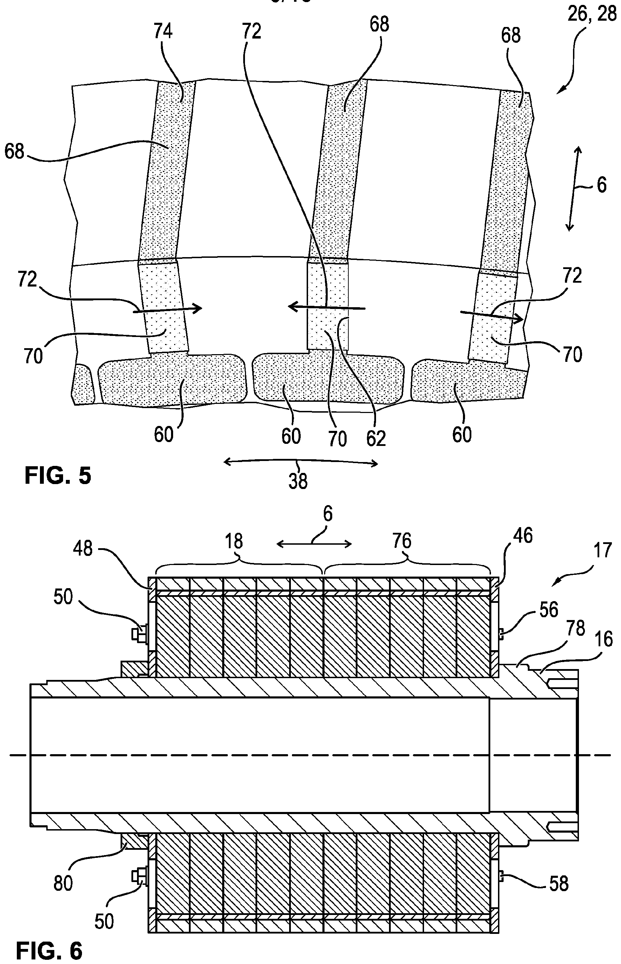

Zwischen jeder Tasche 62 und dem zugeordneten Magneten 70 ist eine Spielpassung erstellt, und jeder der Magnete 70 ist mit einer Beschichtung aus einem Epoxidharz versehen. Zudem weist jeder der Magnete 70 eine Magnetisierungsrichtung 72 auf, die parallel zur tangentialen Richtung 38 ist. Mit anderen Worten sind die Magnete 70 in tangentialer Richtung 38 magnetisiert. Zusammenfassend weist jeder Teilkörper 26, 28 die sechzig Magneten 70 auf, die in tangentialer Richtung 38 magnetisiert sind. Hierbei ist die Magnetisierungsrichtung 72 jeweils in tangentialer Richtung 38 direkt benachbarter Magneten 70 entgegengesetzt, sodass zwischen jeweils benachbarten Magneten 70 die Pole des Rotors 18 gebildet sind, wie in Fig. 5 gezeigt. Zudem sind die Kammern 60 in Tangentialrichtung 38 zueinander beabstandet und folglich nicht verbunden.

Jede der Kammern 60 sowie jede der Öffnungen 68 ist mit einem para- oder diamagnetischen Füllstoff 74 in Form eines Vergusses befüllt. Der Füllstoff 74 ist ein Epoxidharz, welches nach Anbringung der Teilkörper 26, 28 an der Welle 16 in diese eingefüllt und dort ausgehärtet wird. In einer weiteren Alternative ist der Füllstoff 74 Luft.

Aufgrund der Kammern 60 und des Füllstoffs 74 werden die mittels jedes Magneten 70 bereitgestellte Feldlinien in radialer Richtung 35 nach außen gedrängt, sodass diese zwischen den jeweils benachbarten Öffnungen 68 in den Luftspalt 20 austreten. Ein Ausbreiten der Magnetfeldlinien in radialer Richtung 35 nach innen auf die Welle 16 zu ist hingegen verhindert oder zumindest verringert. Dabei ist aufgrund des Füllstoffs 74 sowie der zwischen den einzelnen Kammern 60 verlaufenden Stege dennoch eine mechanische Integrität der einzelnen Teilkörper 26, 28 und somit des Rotorkörpers 18 gegeben. Der Füllstoff 74 weist insbesondere eine ideale relative Permeabilität von 1 auf, weswegen der magnetische Fluss eines Pols vom Magneten 70 über den Luftspalt 20 in den Stator 22 fließt.

Die Teilkörper 26, 28 sind im Montagezustand des Rotorkörpers 17 derart in Axialrichtung 6 aneinander gefügt, dass die Kammern 60 und die Taschen 62 benachbarter Teilkörper 26, 28 in axialer Richtung 6 fluchten. Hierbei sind jedem der Teilkörper 26, 28 jeweils sechzig Magneten zugeordnet, weswegen der Rotorkörper 18 insgesamt dreihundert Magnete 70 aufweist. In einer Alternative sind lediglich sechzig Magnete 70 vorhanden, wobei die Länge jedes Magneten 70 in axialer Richtung 6 der Länge der fünf Teilkörper 26, 28 entspricht. Hierbei ragt jeder der Magnete 70 durch sämtliche Teilkörper 26, 28 des Rotorkörpers 18 hindurch und ist folglich in insgesamt fünf der insgesamt dreihundert Taschen 62 angeordnet.

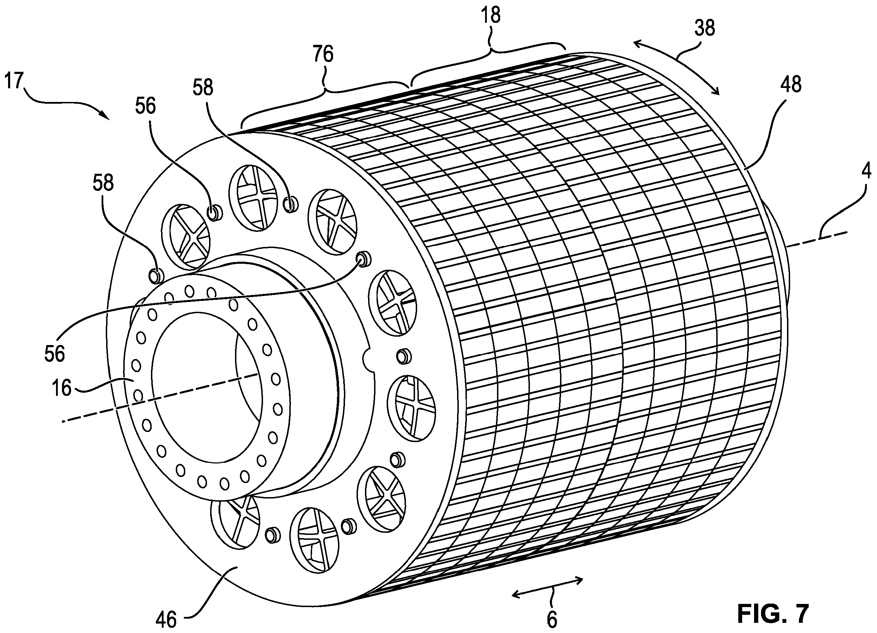

In Fig. 6 und 7 ist eine weitere Ausgestaltungsform des Rotors 17 dargestellt. Hierbei weist der Rotor 17 den in den vorherigen Figuren gezeigten Rotorkörper 18 und einen hierzu baugleichen zweiten Rotorkörper 76 auf, die in axialer Richtung 6 zueinander benachbart zwischen den beiden Abdeckungen 48, 46 angeordnet sind. Die Welle 16 ist als eine Hohlwelle ausgestaltet, und die beiden Rotorkörper 18, 76 sind auf die Welle 16 aufgesteckt. Zur Montage wird zunächst die erste Abdeckung 46 auf die Welle 16 aufgesteckt, bis diese an einer Schulter 78 anliegt. Im Anschluss hieran wird der zweite Rotorkörper 76, der Rotorkörper 18 und die zweite Abdeckung 48 auf die Welle 16 aufgesetzt. Im Anschluss hieran werden die Achsen 56, 58 durch die Rotorkörper 18, 76 und deren jeweilige Teilkörper 26, 28 gesteckt und mittels der Muttern 50 und der Bohrungen 54 befestigt. Infolgedessen werden die Abdeckungen 46, 48 und somit die Rotorkörper 18, 76 und daher auch die Teilkörper 26, 28 in axialer Richtung 6 aufeinander zu gepresst. Im Anschluss hieran wird auf die Welle 16 eine Manschette 80 aufgesetzt und mit der Welle 16 verschweißt. Infolgedessen ist ein Ablösen der Rotorkörper 18, 76 oder der Abdeckungen 46, 48 von der Welle 16 unterbunden.

Zusammenfassend sind die beiden Rotorkörper 18, 76 in axialer Richtung 6 aneinander gefügt. Der zweite Rotorkörper 76 ist bezüglich des Rotorkörpers 18 derart angeordnet, dass die Taschen 62 des Rotorkörpers 18 und des zweiten Rotorkörpers 76 in tangentialer Richtung 38 zueinander versetzt sind. Hierbei beträgt der Versatz 0,5°. Infolgedessen fluchten die Magneten 70 der beiden Rotorkörper 18, 76 nicht miteinander, weswegen ein Rastmoment der elektrischen Maschine 2 verringert und zumindest teilweise aufgehoben ist. Der zweite Rotorkörper 76 entspricht dem Rotorkörper 18, der um 180° bezüglich einer radial verlaufenden Achse gedreht ist. Die elektrische Maschine 2 weist hierbei zwei Federn auf, die innerhalb jeweils einer der Nuten 33 der beiden Rotorkörper 18, 76 angeordnet sind, die bezüglich der Rotationsachse 4 spiegelsymmetrisch sind. Die Schrägung des Rotors 17 wird somit insbesondere nicht durch den Versatz der Nuten 33 und der Federn erreicht, sondern durch den Versatz der Taschen um 0,25° zur Mittelebene der Nuten 33. Der Außenbereich mit den Magneten 70 ist somit um diesen Winkel zu einem Innenbereich des Rotors 17 verdreht. Durch das Umschichten der beiden Rotorkörper 17, 76 um 180° um die radial verlaufende Achse ergibt sich ein Versatz (=Schrägung des Rotors) von 0,25°+0,25°=0,5°.

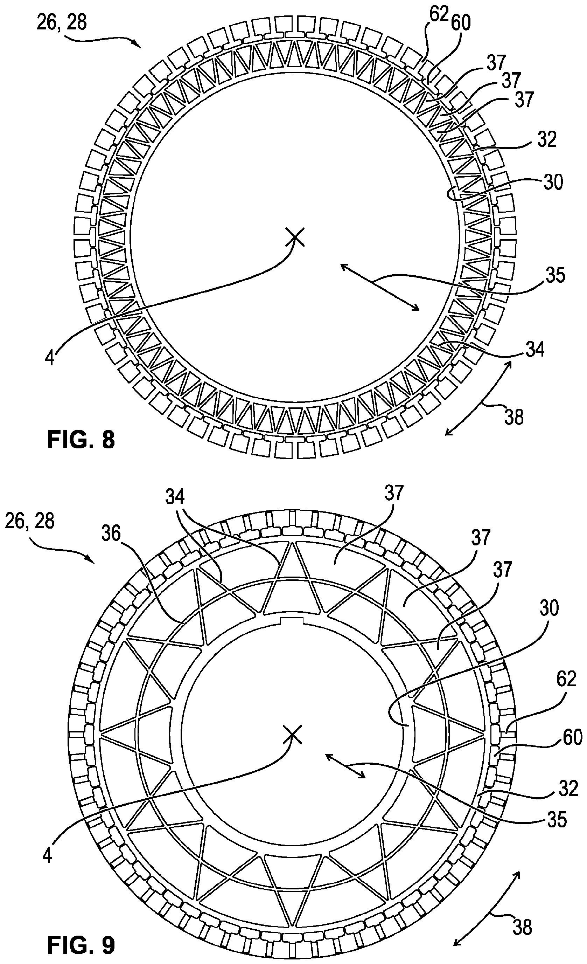

In Fig. 8 ist eine Abwandlung der Teilkörper 26, 28 dargestellt. Die Kammern 60 und die Taschen 62 sind unverändert. Jedoch ist der dritte Hohlzylinder 36 weggelassen, sodass die Teilkörper 26, 28 lediglich den ersten Hohlzylinder 30 und den zweiten Hohlzylinder 32 aufweisen, zwischen denen sich die Speichen 34 in radialer Richtung 35 befinden. Die Speichen 34 verlaufen sowohl in radialer als auch tangentialer Richtung 35, 38, wobei jeweils eines der Freienden von jeweils benachbarten Speichen 34 aneinander angebunden ist, sodass sich eine sonnenartige Anordnung der Speichen 34 ergibt. Auch ist der erste Hohlzylinder 30 in radialer Richtung 35 im Vergleich zu vorherigen Ausführungsformen weiter nach außen versetzt. Infolgedessen ist die Form der Öffnungen 37 im Vergleich zu den vorherigen Ausführungsformen abgeändert.

In Fig. 9 ist eine weitere Ausgestaltungsform der Teilkörper 26, 28 dargestellt, wobei wiederum die Kammern 60 und die Taschen 62 unverändert belassen sind. Auch bildet wiederum der zweite Hohlzylinder 32 den radial innenliegenden Boden der Kammern 60. Der erste Hohlzylinder 30 ist in radialer Richtung 35 nach innen versetzt und weist im Wesentlichen den gleichen Innendurchmesser wie bei der in Fig. 3 gezeigten Variante auf. Auch ist der dritte Hohlzylinder 36 vorhanden, der in radialer Richtung 35 zwischen dem ersten Hohlzylinder 30 und dem zweiten Hohlzylinder 32 positioniert ist. Die Anzahl der Speichen 34 ist im Vergleich zur vorherigen Ausführungsform verringert, wobei deren Verlauf wiederum ebenfalls in radialer Richtung 35 und tangentialer Richtung 38 ist, und wobei jeweils die Freienden benachbarter Speichen 34 aneinander angebunden sind. Die Speichen 34 schneiden jeweils den dritten Hohlzylinder 36.

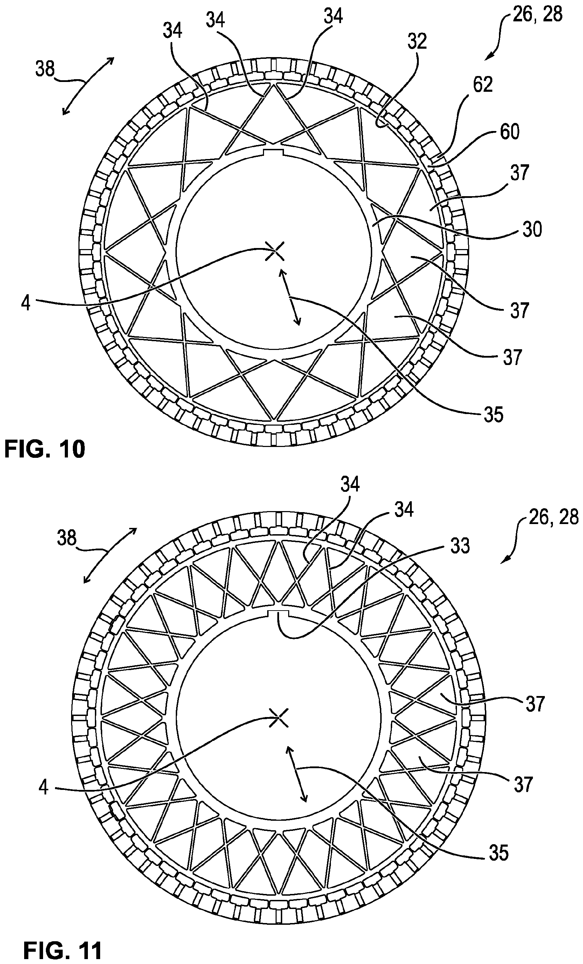

In Fig. 10 ist eine weitere Ausgestaltungsform der Teilkörper 26, 28 gezeigt, wobei wiederum die Taschen 62 und die Kammern 60 sowie der zweite Hohlzylinder 32 unverändert belassen sind. Der erste Hohlzylinder 30 entspricht der in Fig. 9 gezeigten Variante, wobei im Vergleich hierzu der dritte Hohlzylinder 36 weggelassen ist. Auch sind die Speichen 34 verlängert und weisen einen ausgeprägteren Verlauf in tangentialer Richtung 38 auf, sodass sich benachbarte Speichen 34 zwischen deren Freienden schneiden. Hierbei sind jeweils die Freienden der übernächsten Speichen 34 aneinander angebunden. Aufgrund des Schneidens sind die Speichen 34 zueinander stabilisiert.

In Fig. 11 ist eine weitere Ausgestaltungsform der Teilkörper 26, 28 gezeigt. Im Vergleich zur vorherigen Ausgestaltungsform ist lediglich die Anzahl der Speichen 34 sowie deren Länge verändert. So entspricht die Länge im Wesentlichen der Länge der in Fig. 9 gezeigten Speichen 34, wobei im Vergleich hierzu jedoch die Anzahl der Speichen 34 verdoppelt und der dritte Hohlzylinder 36 weggelassen ist. Jeweils zwei Speichen 34 schneiden sich jeweils, und jeweils eines der Freienden jeder Speiche 34 ist an einem der Freienden der jeweils übernächsten Speiche 34 in tangentialer Richtung 38 angebunden. Daher sind die Öffnungen 37 im Vergleich zur vorher gezeigten Ausführungsform verringert.

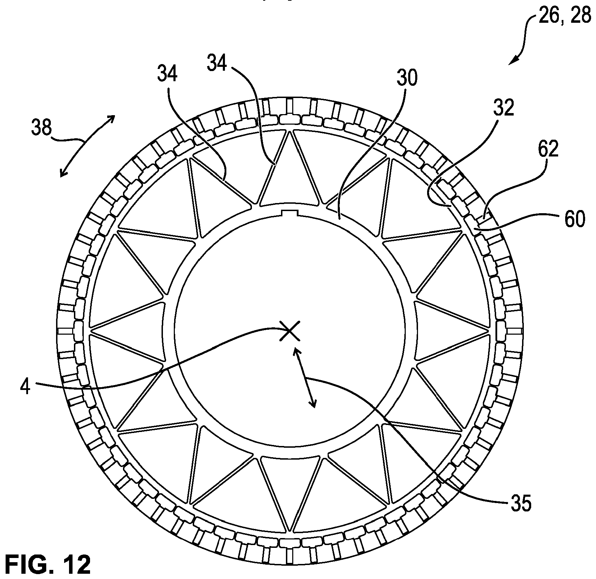

In Fig. 12 ist eine weitere Ausgestaltungsform der baugleichen Teilkörper 26, 28 gezeigt. Diese Ausführungsform entspricht der in Fig. 9 dargestellten Variante, wobei der dritte Hohlzylinder 36 weggelassen ist. So sind die Speichen 34, der erste und der zweite Hohlzylinder 30,32 sowie die Kammern 60 und die Taschen 62 unverändert belassen.

Bei den in Fig. 8 bis Fig. 12 gezeigten Varianten sind die Laschen 40 sowie die Buchsen 44 nicht gezeigt. Jedoch sind diese an einem Teil der Speichen 34 entsprechend der in Fig. 3 gezeigten Anordnung angebunden. Infolgedessen sind auch diese Teilkörper 26, 28 mittels der Achsen 56 und der zweiten Achsen 58 in axialer Richtung 6 aneinander gefügt. In weiteren, alternativen Ausführungsformen sind die Laschen 40 und/oder die Ösen 42 weggelassen.

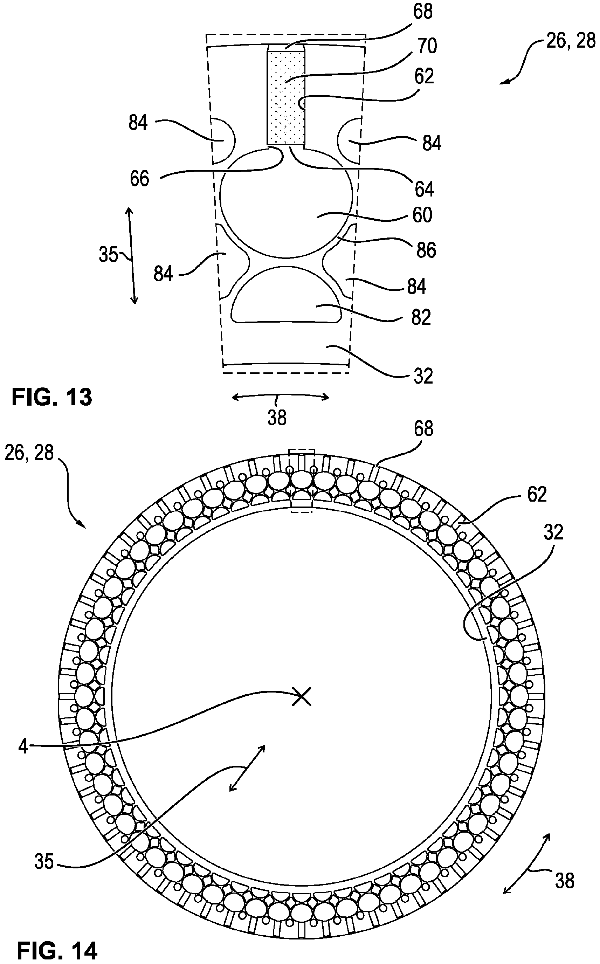

In Fig. 13 ist gemäß der Darstellung der Fig. 4 ein Ausschnitt einer weiteren Ausgestaltungsform der beiden Teilkörper 26, 28 und in Fig. 14 ein größerer Ausschnitt davon gezeigt, wobei Fig. 13 den in Fig. 14 mittels einer strichpunktierten Linie angedeuteten Ausschnitt zeigt. Die Taschen 62 sowie die Magneten 70 und die Öffnungen 68, mittels derer die Taschen 62 radial außen geöffnet sind, sind unverändert belassen. Auch der Schlitz 64 und die Vorsprünge 66 sind unverändert belassen.

Die Kammer 60 ist abgeändert und weist einen gerundeten Querschnitt auf. So ist keine der Kanten des Querschnitts gerade, wobei die Rundung jedoch variiert. Auch sind die Kammer 60 bezüglich des zweiten Hohlzylinders 32 radial nach außen versetzt, und zwischen jeder der Kammern 60 und dem zweiten Hohlzylinder 32 ist in radialer Richtung 35 eine erste Öffnung 82 gebildet, deren Querschnitt im Wesentlichen halbkreisförmig ausgestaltet ist, und deren gerader Boden mittels des zweiten Hohlzylinders 32 gebildet ist. Ferner weisen die Teilkörper 26, 28 weitere Öffnungen 84 auf, die sich in tangentialer Richtung 38 entweder zwischen benachbarten Kammern 60 und benachbarten ersten Öffnungen 82 oder zwischen benachbarten Kammern 60 und benachbarten Taschen 62 befinden. Hierbei ist der Querschnitt eines Teils der weiteren Öffnungen 84 kreisförmig und ein weiterer Anteil rautenförmig. Die erste Öffnung 82, die weiteren Öffnungen 84 sowie die Kammer 60 sind mittels Stegen 86 voneinander getrennt, weswegen eine mechanische Integrität der Teilkörper 26, 28 weiter vorhanden ist. Aufgrund der weiteren Öffnungen 84 ist ein Eindringen der mittels der Magnete 70 bereitgestellten Magnetfeldlinien radial nach innen weiter vermindert. Auf der radialen Innenseite des zweiten Hohlzylinders 32 schließen sich beispielsweise die Streben 34, der erste Hohlzylinder 30 sowie gegebenenfalls der dritte Hohlzylinder 36 entsprechend der in Fig. 3 bis 12 gezeigten Varianten an. Der magnetische Fluss des gegenüberliegenden Pols ist aufgrund des Hohlzylinders 32 und der Stege 86 minimiert. In Abhängigkeit der mechanischen Auslegung der Stege 86 wird die mechanische Leistung beeinflusst. Mittels des Füllstoffs 74 wird die mechanische Festigkeit erhöht und die Stege 86 stabilisiert.

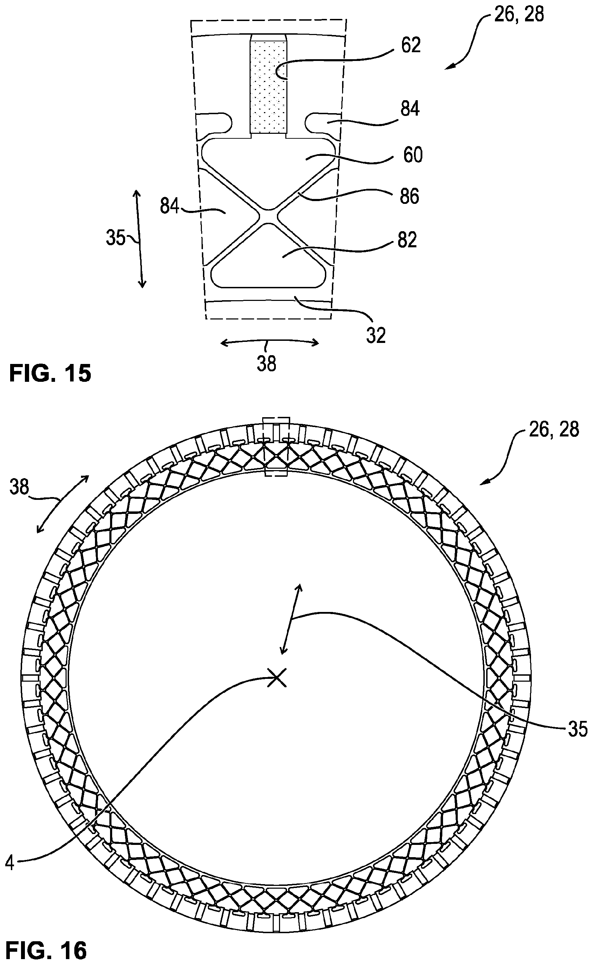

In Fig. 15 und Fig. 16 ist entsprechend der Fig. 13, 14 eine weitere Ausgestaltungsform der Teilkörper 26, 28 gezeigt, wobei auch hier der erste Hohlzylinder 30, die Speichen 34 sowie gegebenenfalls der dritte Hohlzylinder 36 nicht gezeigt sind. Im Vergleich zur vorherigen Ausführungsform sind die Kammern 60, die ersten Öffnungen 82 sowie die weiteren Öffnungen 84 als auch die Stege 86 und der zweite Hohlzylinder 32 abgeändert, wobei lediglich die Dicke des zweiten Hohlzylinders 32 in radialer Richtung 35 verringert ist. Der Querschnitt der Kammern 60 ist dreieckförmig mit abgerundeten Ecken, wobei das Dreieck ein gleichschenkeliges Dreieck ist, dessen Spitze radial nach innen weist. Der Querschnitt der ersten Öffnung 82 ist ebenfalls dreieckförmig und entspricht dem Querschnitt der jeweils zugeordneten Kammer 60, welcher jedoch um 180° derart gedreht ist, dass die beiden Spitzen aufeinander zu weisen. Die Stege 86 verlaufen im Wesentlichen geradlinig und sowohl in radialer als auch in tangentialer Richtung 35, 38 und schneiden sich unter einem Winkel von 100°. Infolgedessen ist ein Teil der weiteren Öffnungen 84 rautenförmig. Die zwischen den Taschen 62 angeordneten weiteren Öffnungen 84 weisen im Wesentlichen rechteckförmigen Querschnitt auf. Auf der radialen Innenseite des zweiten Hohlzylinders 32 schließen sich beispielsweise die Streben 34, der erste Hohlzylinder 30 sowie gegebenenfalls der dritte Hohlzylinder 36 entsprechend der in Fig. 3 bis 12 gezeigten Varianten an.

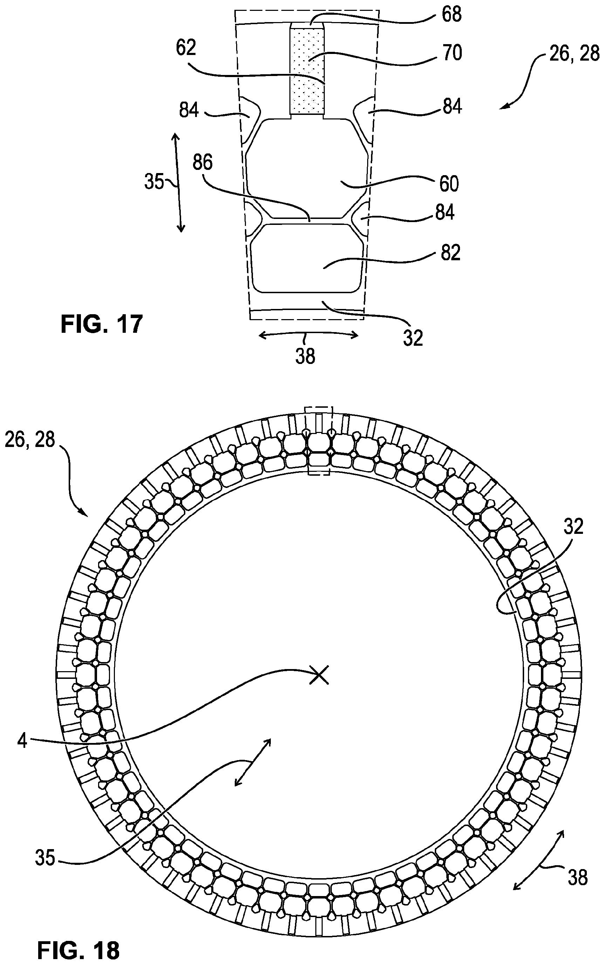

In Fig. 17 und Fig. 18 ist eine letzte Ausgestaltungsform der Teilkörper 26, 28 gezeigt. Bei dieser Ausgestaltungsform weisen die Kammern 60 einen wabenförmigen Querschnitt auf. Mit anderen Worten ist der Querschnitt jeweils ein regelmäßiges Achteck. Der Querschnitt der ersten Öffnung 82, welche sich jeweils wiederum zwischen dem zweiten Hohlzylinder 32 und der zugeordneten Kammer 60 befindet, ist im Wesentlichen quader- oder sechseckförmig. Der Querschnitt der weiteren Öffnungen 84 ist rautenförmig oder kreisförmig ausgestaltet. Infolgedessen verlaufen die Stege 86 im Wesentlichen geradlinig, wobei im Vergleich zur vorhergehenden Ausführungsform die Anzahl der Stege 86 erhöht ist. Aufgrund der wabenförmigen Ausgestaltung der Kammer 60 mit dem achteckigen Querschnitt ist eine vergleichsweise hohe Robustheit gegeben. Auf der radialen Innenseite des zweiten Hohlzylinders 32 schließen sich beispielsweise die Streben 34, der erste Hohlzylinder 30 sowie gegebenenfalls der dritte Hohlzylinder 36 entsprechend der in Fig. 3 bis 12 gezeigten Varianten an.

Bei den in Fig. 13 bis 18 gezeigten Ausgestaltungen sind die Kammern 60, die ersten Öffnungen 82 und die weiteren Öffnungen 84 bevorzugt mit dem Füllstoff 74 befüllt, welcher Epoxidharz ist. Infolgedessen ist die mechanische Integrität der Teilkörper 26, 28 weiter erhöht.

Zusammenfassend wird aufgrund der Ausgestaltung der Teilkörper 26, 28 der magnetische Widerstand erhöht, was zu einem erhöhten Drehmoment führt. Aufgrund der Ausgestaltung der Kammern 60 sowie der Streben 86 und der Speichen 34 ist jedoch eine vergleichsweise hohe Festigkeit gegeben. Wegen der unterschiedlichen Geometrien ist eine vergleichsweise hohe mechanische Steifigkeit gegeben, und der magnetische Widerstand in den Verstrebungen, insbesondere den Streben 86 und den Speichen 34, ist erhöht, weswegen ein erhöhtes Drehmoment erzielt ist. Auch weist die als Innenläufer ausgestaltete elektrische Maschine 2 aufgrund der radialen Anordnung der Magnete 70 ein sogenanntes "Spoke-Design" (Speichen-Design) auf.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den einzelnen Ausführungsbeispielen beschriebene Einzelmerkmale auch auf andere Weise miteinander kombinierbar, ohne den Gegenstand der Erfindung zu verlassen.

### Bezugszeichenliste

- 2: elektrische Maschine
- 4: Rotationsachse
- 6: axiale Richtung
- 8: Gehäuse
- 10: A-seitiges Lagerschild
- 12: B-seitiges Lagerschild
- 14: Kugellager
- 16: Welle
- 17: Rotor
- 18: Rotorkörper
- 20: Luftspalt
- 22: Stator
- 24: Umrichter
- 26: erster Teilkörper
- 28: zweiter Teilkörper
- 30: erster Hohlzylinder
- 32: zweiter Hohlzylinder
- 33: Nut
- 34: Speiche
- 35: radiale Richtung
- 36: dritter Hohlzylinder
- 37: Öffnung
- 38: tangentiale Richtung
- 40: Lasche
- 42: Öse
- 44: Buchse
- 46: erste Abdeckung
- 48: zweite Abdeckung
- 50: Mutter
- 52: Loch
- 54: Bohrung
- 56: Achse
- 58: zweite Achse
- 60: Kammer
- 62: Tasche
- 64: Schlitz
- 66: Vorsprung
- 68: Öffnung
- 70: Magnet
- 72: Magnetisierungsrichtung
- 74: Füllstoff
- 76: zweiter Rotorkörper
- 78: Schulter
- 80: Manschette
- 82: erste Öffnung
- 84: weitere Öffnung
- 86: Steg

## Patentansprüche

1. Rotor (17) einer elektrischen Maschine (2), insbesondere Elektromotor, mit einem eine Welle (16) umfangsseitig umgebenden Rotorkörper (18), der einen ersten Teilkörper (26) und einen zweiten Teilkörper (28) aufweist, die in axialer Richtung (6) mittels einer sich in axialer Richtung (6) erstreckenden und bezüglich der Welle (16) radial nach außen versetzten Achse (56) aneinander gefügt sind, wobei der erste Teilkörper (26) eine Öse (42) aufweist, innerhalb derer eine die Achse (56) aufnehmende Buchse (44) angeordnet ist, und wobei der zweite Teilkörper (28) eine die Achse (56) aufnehmende Lasche (40) aufweist, **dadurch gekennzeichnet dass** der erste und der zweite Teilkörper (26, 28) jeweils ein Blechpaket ist.

2. Rotor (17) nach Anspruch 1,
**dadurch gekennzeichnet,**
**dass** die Buchse (44) mit der Öse (42) verpresst ist, und/oder dass die Buchse (44) aus einem Kunststoff gefertigt ist, insbesondere PTFE.

3. Rotor (17) nach Anspruch 1 oder 2,
**dadurch gekennzeichnet,**
**dass** der Außendurchmesser der Öse (42) gleich dem Außendurchmesser der Lasche (40) ist.

4. Rotor (17) nach einem der Ansprüche 1 bis 3,
**dadurch gekennzeichnet,**
**dass** der erste Teilkörper (26) und der zweite Teilkörper (28) jeweils einen sich axial erstreckenden ersten Hohlzylinder (30) und einen diesen umfangsseitig umgebenden und sich axial erstreckenden zweiten Hohlzylinder (32) aufweist, die mittels radial verlaufender Speichen (34) miteinander verbunden sind, wobei die Achse (56) zwischen dem ersten Hohlzylinder (30) und dem zweiten Hohlzylinder (32) angeordnet ist.

5. Rotor (17) nach einem der Ansprüche 1 bis 4,
**gekennzeichnet durch**
eine zweite Achse (58), wobei der zweite Teilkörper (28) eine Öse (42) aufweist, innerhalb derer eine die zweite Achse (58) aufnehmende Buchse (44) angeordnet ist, und wobei der erste Teilkörper (26) eine die zweite Achse (58) aufnehmende Lasche (40) aufweist.

6. Rotor (17) nach Anspruch 5,
**dadurch gekennzeichnet,**
**dass** die beiden Teilkörper (26, 28) baugleich sind.

7. Rotor (17) nach einem der Ansprüche 1 bis 6,
**dadurch gekennzeichnet,**
**dass** der erste Teilkörper (26) eine erste Anzahl derartiger Ösen (42) aufweist, innerhalb derer jeweils eine Buchse (44) angeordnet ist, dass der zweite Teilkörper (28) die erste Anzahl derartiger Laschen (40) aufweist, und dass der erste Teilkörper (26) und der zweite Teilkörper (28) mittels der ersten Anzahl an derartigen Achsen (56) aneinander gefügt sind, wobei jede Buchse (44) und jede Lasche (40) jeweils eine der Achsen (56) aufnimmt.

8. Rotor (17) nach einem der Ansprüche 1 bis 7,
**gekennzeichnet durch**
eine zweite Anzahl an ersten Teilkörpern (26) und/oder eine dritte Anzahl an zweiten Teilkörpern (28), die in axialer Richtung (6) abwechselnd angeordnet sind.

9. Rotor (17) nach einem der Ansprüche 1 bis 8,
**gekennzeichnet durch**,
einen baugleichen zweiten Rotorkörper (76), der in axialer Richtung (6) an den Rotorkörper (18) gefügt ist, wobei Magnete (70) des Rotorkörpers (18) und des zweiten Rotorkörpers (76) in tangentialer Richtung (38) zueinander versetzt sind.

10. Rotor (17) nach einem der Ansprüche 1 bis 9,
**dadurch gekennzeichnet,**
**dass** an dem Rotorkörper (18) stirnseitig eine Abdeckung (46, 48) angeordnet ist, an der die Achse (56) befestigt ist, und/oder dass die Achse (56) eine Gewindestange ist.

11. Elektrische Maschine (2), insbesondere Elektromotor, mit einem Rotor (17) nach einem der Ansprüche 1 bis 10, und mit einem den Rotor (17) umfangsseitig umgebenden Stator (22).

## Claims

1. Rotor (17) of an electric machine (2), in particular an electric motor, having a rotor body (18) which circumferentially surrounds a shaft (16) and which has a first sub-body (26) and a second sub-body (28) which in the axial direction (6) are joined together by means of an axle (56) that extends in the axial direction (6) and in terms of the shaft (16) is offset in a radially outward manner, wherein the first sub-body (26) has an eye (42) within which a bush (44) that receives the axle (56) is disposed, and wherein the second sub-body (28) has a lug (40) that receives the axle (56), **characterized in that** the first and the second sub-body (26, 28) each are a laminated core.

2. Rotor (17) according to Claim 1,
**characterized in that**
the bush (44) and the eye (42) are joined by a press-fit, and/or **in that** the bush (44) is made from a plastics material, in particular PTFE.

3. Rotor (17) according to Claim 1 or 2,
**characterized in that**
the external diameter of the eye (42) is identical to the external diameter of the lug (40).

4. Rotor (17) according to one of Claims 1 to 3,
**characterized in that**
the first sub-body (26) and the second sub-body (28) each have an axially extending first hollow cylinder (30) and, circumferentially surrounding the latter, an axially extending second hollow cylinder (32), said hollow cylinders (30, 32) being connected to one another by means of radially running spokes (34), wherein the axle (56) is disposed between the first hollow cylinder (30) and the second hollow cylinder (32).

5. Rotor (17) according to one of Claims 1 to 4,
**characterized by**
a second axle (58), wherein the second sub-body (28) has an eye (42) within which a bush (44) that receives the second axle (58) is disposed, and wherein the first sub-body (26) has a lug (40) that receives the second axle (58) .

6. Rotor (17) according to Claim 5,
**characterized in that**
the two sub-bodies (26, 28) are of identical construction.

7. Rotor (17) according to one of Claims 1 to 6,
**characterized in that**
the first sub-body (26) has a first number of eyes (42) of this type within which one bush (44) is in each case disposed, **in that** the second sub-body (28) has the first number of lugs (40) of this type, and **in that** the first sub-body (26) and the second sub-body (28) are joined together by means of the first number of axles (56) of this type, wherein each bush (44) and each lug (40) receives in each case one of the axles (56).

8. Rotor (17) according to one of Claims 1 to 7,
**characterized by**
a second number of first sub-bodies (26) and/or a third number of second sub-bodies (28) which are disposed in an alternating manner in the axial direction (6).

9. Rotor (17) according to one of Claims 1 to 8,
**characterized by**
a second rotor body (76) of identical construction which is joined to the rotor body (18) in the axial direction (6), wherein magnets (70) of the rotor body (18) and of the second rotor body (76) are mutually offset in the tangential direction (38).

10. Rotor (17) according to one of Claims 1 to 9,
**characterized in that**
a cover (46, 48) to which the axle (56) is fastened is disposed on the end side of the rotor body (18), and/or in that the axle (56) is a threaded bar.

11. Electric machine (2), in particular electric motor, having a rotor (17) according to one of Claims 1 to 10, and having a stator (22) which circumferentially surrounds the rotor (17).

## Revendications

1. Rotor (17) d'une machine électrique (2), notamment d'un moteur électrique, pourvu d'un corps de rotor (18), entourant le pourtour d'un arbre (16), qui comprend un premier corps partiel (26) et un deuxième corps partiel (28), qui sont assemblés l'un à l'autre dans la direction axiale (6) au moyen d'un axe (56) s'étendant dans la direction axiale (6) et décalé radialement vers l'extérieur par rapport à l'arbre (16), le premier corps partiel (26) comprenant un œillet (42), à l'intérieur duquel est agencée une douille (44) logeant l'axe (56), et le deuxième corps partiel (28) comprenant une attache (40) logeant l'axe (56), **caractérisé en ce que** le premier et le deuxième corps partiel (26, 28) sont chacun un paquet de tôles.

2. Rotor (17) selon la revendication 1, **caractérisé en ce que** la douille (44) est comprimée avec l'œillet (42), et/ou **en ce que** la douille (44) est fabriquée en une matière plastique, notamment en PTFE.

3. Rotor (17) selon la revendication 1 ou 2, **caractérisé en ce que** le diamètre extérieur de l'œillet (42) est identique au diamètre extérieur de l'attache (40) .

4. Rotor (17) selon l'une quelconque des revendications 1 à 3, **caractérisé en ce que** le premier corps partiel (26) et le deuxième corps partiel (28) comprennent chacun un premier cylindre creux (30) s'étendant axialement et un deuxième cylindre creux (32) entourant le pourtour de celui-ci et s'étendant axialement, qui sont reliés l'un à l'autre au moyen de rayons (34) s'étendant radialement, l'axe (56) étant agencé entre le premier cylindre creux (30) et le deuxième cylindre creux (32).

5. Rotor (17) selon l'une quelconque des revendications 1 à 4, **caractérisé par** un deuxième axe (58), le deuxième corps partiel (28) comprenant un œillet (42), à l'intérieur duquel est agencée une douille (44) logeant le deuxième axe (58), et le premier corps partiel (26) comprenant une attache (40) logeant le deuxième axe (58).

6. Rotor (17) selon la revendication 5, **caractérisé en ce que** les deux corps partiels (26, 28) sont de construction identique.

7. Rotor (17) selon l'une quelconque des revendications 1 à 6, **caractérisé en ce que** le premier corps partiel (26) comprend un premier nombre de tels œillets (42), à l'intérieur desquels est agencée à chaque fois une douille (44), **en ce que** le deuxième corps partiel (28) comprend le premier nombre de telles attaches (40), et **en ce que** le premier corps partiel (26) et le deuxième corps partiel (28) sont assemblés l'un à l'autre au moyen du premier nombre de tels axes (56), chaque douille (44) et chaque attache (40) logeant à chaque fois un des axes (56).

8. Rotor (17) selon l'une quelconque des revendications 1 à 7, **caractérisé par** un deuxième nombre de premiers corps partiels (26) et/ou un troisième nombre de deuxièmes corps partiels (28), qui sont agencés en alternance dans la direction axiale (6) .

9. Rotor (17) selon l'une quelconque des revendications 1 à 8, **caractérisé par** un deuxième corps de rotor de construction identique (76), qui est assemblé au corps de rotor (18) dans la direction axiale (6), des aimants (70) du corps de rotor (18) et du deuxième corps de rotor (76) étant décalés les uns par rapport aux autres dans la direction tangentielle (38).

10. Rotor (17) selon l'une quelconque des revendications 1 à 9, **caractérisé en ce qu'**un couvercle (46, 48) est agencé côté frontal sur le corps de rotor (18), auquel l'axe (56) est fixé, et/ou **en ce que** l'axe (56) est une tige filetée.

11. Machine électrique (2), notamment moteur électrique, pourvue d'un rotor (17) selon l'une quelconque des revendications 1 à 10, et pourvue d'un stator (22) entourant le pourtour du rotor (17).
